# EUROPEAN PATENT SPECIFICATION

(11) **EP 4 124 527 B1**
(45) Date of publication and mention of the grant of the patent: **26.03.2025**
(21) Application number: 22186464.8
(22) Date of filing: 22.07.2022
(51) Int. Cl.: B60T 13/74, B60T 8/171, B60T 8/172, B60T 17/22, B60T 7/12, B60T 8/17, F16D 66/00, F16D 66/02

(54) **BRAKE DEVICE, ABNORMAL OPERATION DETERMINATION METHOD, AND ABNORMAL OPERATION DETERMINATION PROGRAM**
BREMSVORRICHTUNG, VERFAHREN ZUR BESTIMMUNG VON ABNORMALEM BETRIEB UND PROGRAMM ZUR BESTIMMUNG VON ABNORMALEM BETRIEB
DISPOSITIF DE FREINAGE, PROCÉDÉ DE DÉTERMINATION DE FONCTIONNEMENT ANORMAL ET PROGRAMME DE DÉTERMINATION DE FONCTIONNEMENT ANORMAL

(30) Priority: 27.07.2021 JP 2021122669
(43) Date of publication of application: 01.02.2023
(73) Proprietor: Nabtesco Corporation, Tokyo 102-0093 (JP)
(72) Inventor: Kigami, Shogo, Tokyo, 102-0093 (JP)
(74) Representative: Grünecker Patent- und Rechtsanwälte PartG mbB

(56) References cited:
- EP-A1- 1 787 882
- DE-A1- 102016 112 971
- DE-A1- 102019 218 004
- DE-A1- 19 833 815
- JP-A- 2000 130 482
- JP-A- 2018 058 530
- JP-A- 2020 001 596
- JP-A- 2020 093 655
- JP-A- 2021 017 088
- JP-B2- 4 959 438
- US-A1- 2011 313 612

## Description

The present invention relates to a brake device, an abnormal operation determination method, and an abnormal operation determination program.

Japanese Patent Application Publication No. 2008-19893 discloses an electric brake device for obtaining a braking force by using motor as a power source to apply a brake shoe to a disc rotating integrally with a wheel The electric brake device brakes a railway vehicle.

Japanese Patent Application Publication JP 2020 001596 A relates to an electric activation of a parking brake. D1 aims to detect an abnormality of an electric motor before the brake becomes inoperable. The electric actuator transforms the motion of a drive motor into a linear motion of a shaft member. The moving speed of the shaft member is compared to a predefined speed. Abnormality of the motor is determined when the number of speed errors exceeds a preset number.

German Patent Application Publication DE 10 2019 218004 A1 relates to an electric parking brake system and a control thereof. The wear amount of the brake pads can be determined when moving the nut member from the parking operation position to the complete parking release position. By comparing a movement distance of the nut member with a pre-set distance the wear amount can be estimated.

German Patent Application Publication DE 10 2016 112971 A1 relates to a diagnostic method for leak tightness of a seal or valve in hydraulic driving systems, in particular a brake system. A piston is slowly moved such that a pressure change occurs in case of a leak.

Japanese Patent Application Publication JP 2018 058530 A relates to an electric brake device for a vehicle. A piston is moved by an electric motor for pressing a braking member wherein a return spring is provided for moving the piston backward. An abnormality of the piston return spring is detected based on the electric power required to move the piston to a predetermined position when it is smaller than a preset value.

In such an electric brake device as in the first application, abnormal operation of the brake device is grasped if the railway vehicle is not decelerated in spite of a brake instruction being issued. Therefore, it is demanded to grasp abnormal operation of the electric brake device based on information acquired from the electric brake device. This issue arises not only in electric brake devices of railway vehicles but also in other electric brake devices.

A brake device that solves the above issue is a brake device for applying brake to a vehicle having a target member by using an electric actuator to drive a friction member so that the friction member is pressed against the target member, the brake device comprising: an acquiring unit for acquiring drive information of the electric actuator; a calculation unit for calculating a first value based on the acquired drive information, the first value being at least one of a moving distance traveled by the friction member or a required time taken until the friction member reaches a predetermined position; and a determination unit for determining whether abnormal operation has occurred by comparing the first value to a standard value.

The abnormal operation determination method that solves the above issue is an abnormal operation determination method for a brake device, the brake device being configured to apply brake to a vehicle having a target member by using an electric actuator to drive a friction member so that the friction member is pressed against the target member, the method comprising: an acquisition step of acquiring drive information of the electric actuator; a calculation step of calculating a first value based on the acquired drive information, the first value being at least one of a moving distance traveled by the friction member or a required time taken until the friction member reaches a predetermined position; and a determination step of determining whether abnormal operation has occurred by comparing the first value to a standard value.

An abnormal operation determination program that solves the above issue is an abnormal operation determination program for a brake device, the brake device being configured to apply brake to a vehicle having a target member by using an electric actuator to drive a friction member so that the friction member is pressed against the target member, the program causing a computer to perform: an acquisition step of acquiring drive information of the electric actuator; a calculation step of calculating a first value based on the acquired drive information, the first value being at least one of a moving distance traveled by the friction member or a required time taken until the friction member reaches a predetermined position; and a determination step of determining whether abnormal operation has occurred by comparing the first value to a standard value.

The present invention makes it possible to grasp abnormal operation of a brake device based on information acquired from the brake device.

### BRIEF DESCRIPTION OF THE DRAWINGS

Fig. 1 is a schematic view showing the configuration of a brake device according to a first embodiment.
Fig. 2 is a view showing time variation of deceleration according to the first embodiment.
Fig. 3 is a view showing time variation of deceleration according to the first embodiment.
Fig. 4 is a view showing variation of a brake instruction and an electric current value of a motor in application of brake, in accordance with the first embodiment.
Fig. 5 is a view showing variation of the brake instruction and the electric current value of the motor in release of the brake, in accordance with the first embodiment.
Fig. 6 is a flowchart showing a state monitoring process performed by the brake device according to the first embodiment.
Fig. 7 is a view showing variation of the brake instruction and the electric current value of the motor in application of brake, in accordance with the first embodiment.
Fig. 8 is a view showing variation of the brake instruction and the electric current value of the motor in release of the brake, in accordance with the first embodiment.
Fig. 9 is a view showing variation of a brake instruction and an electric current value of a main power source in application of brake, in accordance with a second embodiment.
Fig. 10 is a view showing variation of the brake instruction and the electric current value of the main power source in release of the brake, in accordance with the second embodiment.
Fig. 11 is a view showing variation of the brake instruction and the electric current value of the main power source in application of brake, in accordance with the second embodiment.
Fig. 12 is a view showing variation of the brake instruction and the electric current value of the main power source in release of the brake, in accordance with the second embodiment.
Fig. 13 is a view showing variation of a brake instruction and an electric current value of a motor in application of brake, in accordance with a third embodiment.
Fig. 14 is a view showing variation of the brake instruction and the electric current value of the motor in release of the brake, in accordance with the third embodiment.
Fig. 15 is a view showing variation of the brake instruction and the electric current value of the motor in application of brake, in accordance with the third embodiment.
Fig. 16 is a view showing variation of the brake instruction and the electric current value of the motor in release of the brake, in accordance with the third embodiment.
Fig. 17 is a view showing variation of a brake instruction and an electric current value of a main power source in application of brake, in accordance with a fourth embodiment.
Fig. 18 is a view showing variation of the brake instruction and the electric current value of the main power source in release of the brake, in accordance with the fourth embodiment.
Fig. 19 is a view showing variation of the brake instruction and the electric current value of the main power source in application of brake, in accordance with the fourth embodiment.
Fig. 20 is a view showing variation of the brake instruction and the electric current value of the main power source in release of the brake, in accordance with the fourth embodiment.
Fig. 21 is a schematic view showing the configuration of a brake device according to a fifth embodiment.

### DESCRIPTION OF THE PREFERRED EMBODIMENTS

### <First Embodiment>

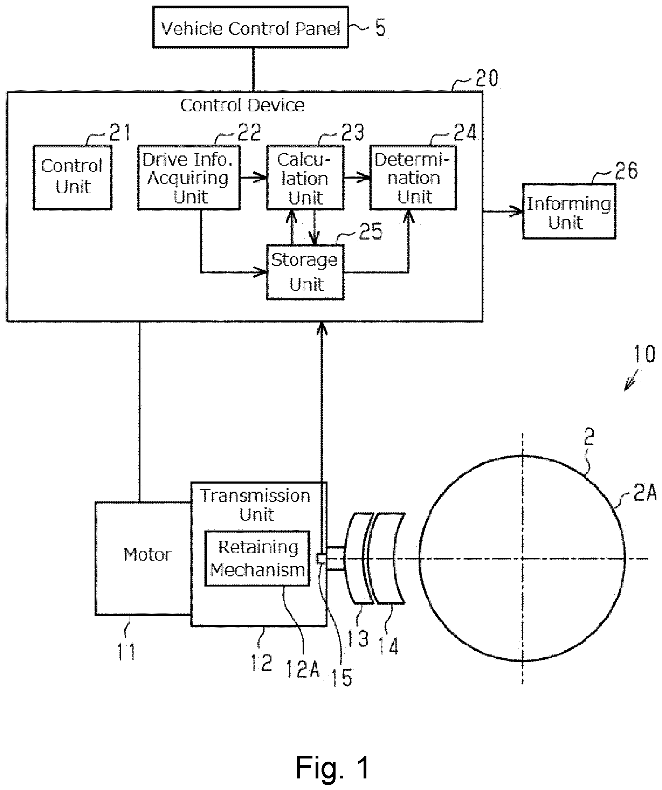

With reference to Figs. 1 to 8, the following describes a brake device according to a first embodiment. The brake device is provided in railway vehicles.

As shown in Fig. 1, the brake device 10 is a tread brake for pressing a brake shoe 14 against the tread surface 2a of a wheel 2 of a railway vehicle, so that a braking force is generated. The brake device 10 includes a rotating motor 11 and is driven by the motor 11. The brake device 10 includes a transmission unit 12 and a brake shoe retainer 13. The transmission unit 12 is configured to transmit the driving force of the motor 11 to the brake shoe 14. The transmission unit 12 uses the driving force from the motor 11 to move the brake shoe retainer 13 in the radial direction of the wheel 2. The transmission unit 12 is provided with a retaining mechanism 12A. The retaining mechanism 12A retains the pressing force of the brake shoe retainer 13 even after the driving of the motor 11 is stopped. The retaining mechanism 12A may be a one-way clutch that mechanically retains the position of the brake shoe retainer 13. The retaining mechanism 12A releases the retention when rotated in the direction for releasing the brake. In the brake device 10 including the retaining mechanism 12A, the driving of the motor 11 can be stopped and the electric current flowing in the motor 11 can be zero while the braking state is maintained. The brake shoe 14 is mounted to the brake shoe retainer 13. The brake shoe 14 is moved along with the brake shoe retainer 13, so that the brake shoe 14 is pressed against the tread surface 2A of the wheel 2. The transmission unit 12 is provided with a pressing force sensor 15. The pressing force sensor 15 senses the pressing force of the brake shoe 14 from the reaction force acting on the transmission unit 12 and outputs information indicating the sensed pressing force to a control device 20. Here, the motor 11 is equivalent to an electric actuator. The wheel 2 is equivalent to a target member, and the brake shoe 14 is equivalent to a friction member.

The brake device 10 is controlled by a control device 20. The control device 20 may be formed of one or more processors that perform various processes in accordance with computer programs (software). The processes to be performed by the control device 20, or the processors, include an abnormal operation determination method. The abnormal operation determination method includes a state monitoring process (described later). Alternatively, the control device 20 may be formed of one or more dedicated hardware circuits such as application-specific integrated circuits (ASICs) that perform at least a part of the various processes, or it may be formed of circuitry including a combination of such circuits. The processor includes a CPU and a memory such as a RAM or a ROM. The memory stores program codes or instructions configured to cause the CPU to perform processes. The memory, or a computer-readable medium, encompasses any kind of available medium accessible to a general-purpose or dedicated computer. The programs stored in the computer-readable storage medium include an abnormal operation determination program. The abnormal operation determination program causes the computer to perform an acquisition step, a calculation step, and a determination step.

The control device 20 controls the braking force based on control instructions from a vehicle control panel 5. The control device 20 includes a control unit 21 for controlling the brake device 10. The control unit 21 drives and controls the motor 11 according to a required braking force. The control unit 21 receives a brake instruction and a release instruction from the vehicle control panel 5. The brake instruction is an instruction for braking the vehicle having the wheel 2 by pressing the brake shoe 14 against the tread surface 2A of the wheel 2. The release instruction is an instruction for releasing the pressing of the brake shoe 14 against the tread surface 2A of the wheel 2. In accordance with the driver's operation, the vehicle control panel 5 outputs to the brake device 10 eight signals, for example, brake signals of one to seven notches and a release signal. These eight signals are represented by combinations of three signal lines each indicating 0 or 1. The control unit 21 causes the motor 11 to rotate in the braking direction to move the brake shoe 14 toward the tread surface 2A of the wheel 2. Conversely, the control unit 21 causes the motor 11 to rotate in the releasing direction opposite to the braking direction to move the brake shoe 14 away from the tread surface 2A of the wheel 2. In releasing the brake, the control unit 21 performs control such that the brake shoe 14 moves from a position where it contacts the tread surface 2A of the wheel 2 to a position at a predetermined distance from the tread surface 2A. Such control regulates the distance to be traveled and the time to be taken until braking is started by bringing the brake shoe 14 into contact with the tread surface 2A of the wheel 2.

The control device 20 includes the drive information acquiring unit 22, a calculation unit 23, a determination unit 24, and a storage unit 25. The drive information acquiring unit 22 acquires drive information of the motor 11. The drive information includes the electric current value of the motor 11 and the number of rotations of the motor 11. The electric current value of the motor 11 indicates the magnitude of the electric current flowing in the motor 11 (an electric actuator). The calculation unit 23 calculates a calculation value C (a first value) based on the acquired drive information of the motor 11. The calculation value C is at least one of the moving distance D traveled by the brake shoe 14 or the required time T taken until the brake shoe 14 reaches a predetermined position. The determination unit 24 compares the calculation value C to a standard value S to determine whether abnormal operation has occurred. The abnormal operation refers to the state in which the operation of the transmission unit 12, the brake shoe retainer 13, and the brake shoe 14 is not normal. This occurs due to a foreign object being caught between the brake shoe 14 and the wheel 2 and due to sticking. The calculation value C is larger or smaller than the standard value S when abnormal operation has occurred. The standard value S is at least one of the moving distance D or the required time T in the normal state.

The magnitude of the electric current value of the motor 11 differs between idling period, in which the brake shoe 14 is not in contact with the tread surface 2A of the wheel 2, and the pressing period, in which the brake shoe 14 is pressed against the tread surface 2A of the wheel 2. There are two ways of control. One is to control the electric current value such that the electric current value in the idling period is smaller than that in the pressing period, while the other is to control the electric current value such that the electric current value in the idling period is larger than that in the pressing period.

The brake device 10 includes an informing unit 26. The informing unit 26 informs a driver or an operator of the occurrence of abnormal operation when it is determined by the determination unit 24. The informing unit 26 may be a speaker that emits sound, an alert lamp that lights, a display, and the like. It is preferable that the informing unit 26 is provided on the vehicle control panel 5 to allow a driver to easily notice the informing unit 26. Alternatively, it is preferable that the informing unit 26 is installed near the brake device 10 to allow an operator to notice it at the time of start-up inspection, preoperational inspection, or the like.

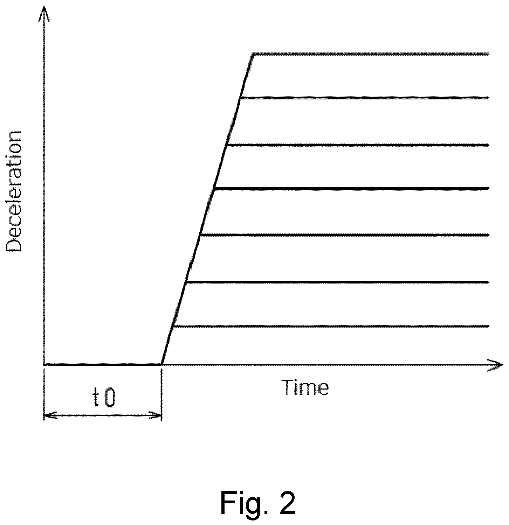

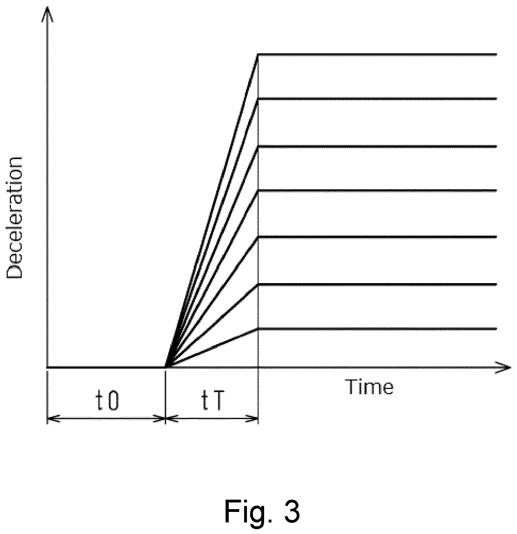

The brake control performed by the control device 20 is divided into two types. The first type is shown in Fig. 2, in which the inclination of the deceleration, or the variation of the deceleration relative to time, is constant irrespective of the target deceleration, and the second type is shown in Fig. 3, in which the time taken until the target deceleration is reached is constant. In the first type of control, the pressing time tT differs in accordance with the target deceleration. Therefore, the determination unit 24 compares the calculation value C to a standard value S for the same conditions. In the second type of control, the number of rotations of the motor 11 differs in accordance with the target deceleration. Therefore, the determination unit 24 compares the calculation value C to a standard value S for the same conditions. The same conditions refer to the same type of control and the same target deceleration.

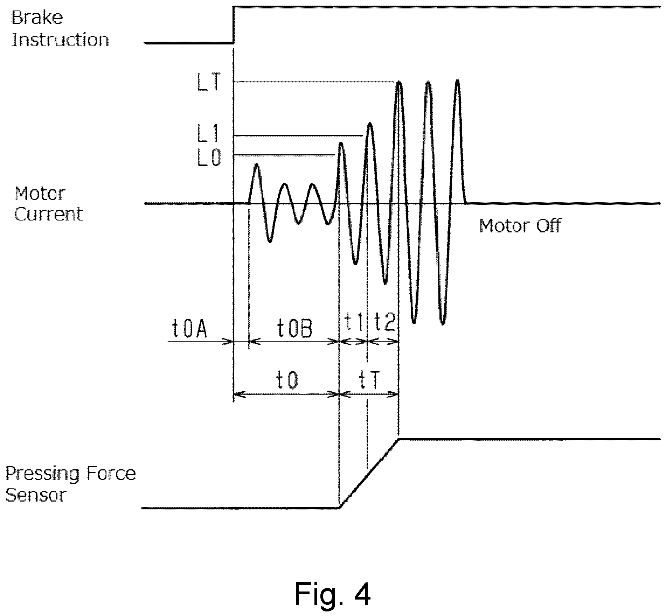

Next, reference is made to Fig. 4 to describe the variation of the electric current value of the motor 11 in application of brake. The control unit 21 performs control such that the electric current value in the idling period is smaller than that in the pressing period. Fig. 4 shows the electric current value of the motor 11 at the time when the control unit 21 receives a brake instruction and applies brake. Specifically, this electric current value represents one of the U, V, and W phases of a three-phase brushless DC motor. Although Fig. 4 shows the brake instruction only, the control unit 21 receives a release instruction while it does not receive the brake instruction.

As shown in Fig. 4, when the control unit 21 receives a brake instruction, an electric current flows in the motor 11 with a delay of start-up time t0A. The start-up time t0A is a small amount of time. When the electric current flows in the motor 11, the transmission unit 12 moves the brake shoe 14 toward the tread surface 2A of the wheel 2. When the brake shoe 14 contacts the tread surface 2A of the wheel 2 or a foreign object, the movement of the brake shoe 14 is restrained, and thus the electric current value exceeds the contact threshold L0. The calculation unit 23 determines that the brake shoe 14 has contacted the tread surface 2A of the wheel 2 or the foreign object when the electric current value reaches the contact threshold L0. The time elapsing after the brake instruction is received and until the electric current value reaches the contact threshold L0 is the idling time t0. The time elapsing after the electric current flows in the motor 11 and until the electric current value reaches the contact threshold L0 is the actual idling time t0B. Therefore, the idling time t0 is the sum of the start-up time t0A and the actual idling time t0B (t0 = t0A + t0B). When the brake shoe 14 presses the tread surface 2A of the wheel 2 or the foreign object, the electric current value becomes larger than it was in the idling period. The electric current value thus reaches a brake threshold L1 corresponding to a predetermined braking force and further reaches a target threshold LT corresponding to a target braking force. After the target threshold LT is reached, the electric current value is no longer increased. The time elapsing after the brake shoe 14 contacts the tread surface 2A of the wheel 2 or the foreign object and until a first point of time at which the electric current value reaches the brake threshold L1 is a first time t1. The time elapsing after the first point of time and until a second point of time at which the electric current value reaches the target threshold LT is a second time t2. The sum of the first time t1 and the second time t2 is the pressing time tT (tT = t1 + t2). The pressing force sensed by the pressing force sensor 15 is increased when the brake shoe 14 presses the tread surface 2A of the wheel 2 or the foreign object and is no longer increased after the electric current value reaches the target threshold LT. The pressing force of the brake shoe retainer 13 is thereafter retained by the retaining mechanism 12A, and thus the motor 11 is de-energized.

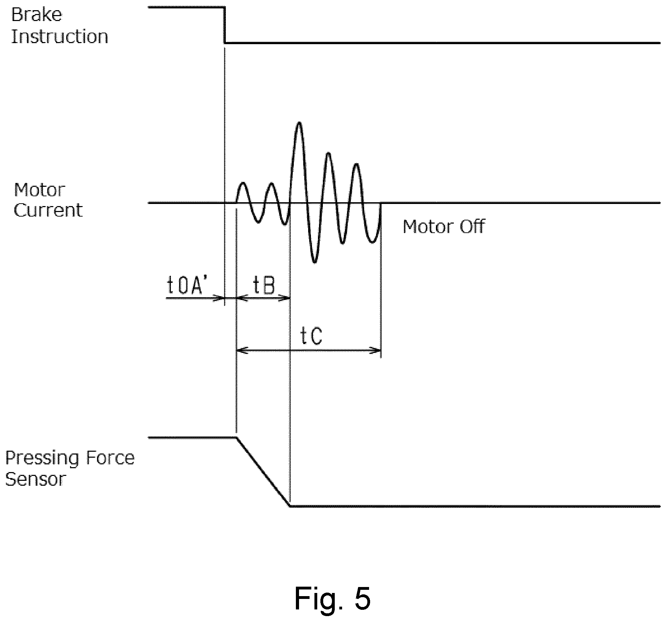

Next, reference is made to Fig. 5 to describe the variation of the electric current value of the motor 11 in release of brake. Even if the control unit 21 performs control in application of brake such that the electric current value in the idling period is smaller than that in the pressing period, the control unit 21 performs control in release of brake such that the electric current value in the idling period is larger than that in the pressing period. Fig. 5 shows the electric current value of the motor 11 at the time when the control unit 21 receives a release instruction and no longer receives the brake instruction and thus it releases brake. Although Fig. 5 shows the brake instruction only, the control unit 21 receives a release instruction while it does not receive the brake instruction.

As shown in Fig. 5, the motor 11 is de-energized while the brake instruction is received. When the control unit 21 receives a release instruction, an electric current flows in the motor 11 with a delay of start-up time t0A'. The start-up time t0A' is a small amount of time. When the electric current flows in the motor 11, the retaining mechanism 12A first releases the retaining force, and thus the pressing force becomes zero. The time elapsing after the electric current flows in the motor 11 and until the pressing force reaches zero is the retaining force releasing time tB. When the retaining mechanism 12A releases the retaining force, the transmission unit 12 moves the brake shoe 14 away from the tread surface 2A of the wheel 2. The electric current value becomes larger than it was in the retaining force releasing time tB in which the retaining mechanism 12A is releasing the retaining force. The control unit 21 stops the motor 11 after a predetermined amount of time has elapsed from the point of time at which the electric current started to flow in the motor 11. This amount of time is a withdrawing time tC. The withdrawing time tC is the time for releasing the braking force and moving the brake shoe 14 to its original position. It is also possible that, after receiving the release instruction, the control unit 21 moves the brake shoe 14 based on the product of a moving speed obtained by converting a predetermined number of rotations of the motor 11 into a stroke of the brake shoe 14 and a predetermined amount of time. Such configuration eliminates the need of sensing the pressing force. It is also possible that the control unit 21 stops the motor 11 after a predetermined amount of time has elapsed from the point of time at which the electric current value became larger. Such configuration eliminates the need of sensing the pressing force. It is also possible that the control unit 21 stops the motor 11 after a predetermined amount of time has elapsed from the point of time at which the pressing force became zero.

The calculation unit 23 calculates at least one of a first to fifth calculation values C1 to C5 described as follows. The first calculation value C1 is at least one of a first moving distance D1 that has been traveled when the electric current value reaches the contact threshold L0 or a first required time T1 that has been taken when the electric current value reaches the contact threshold L0. The contact threshold L0 corresponds to the electric current value at the time when the brake shoe 14 contacts the tread surface 2A of the wheel 2 or the foreign object. The first required time T1 is the idling time t0, and the first moving distance D1 is the product of a moving speed obtained by converting the number of rotations of the motor 11 into a stroke of the brake shoe 14 and the idling time t0. When the brake shoe 14 contacts the foreign object or the sticking occurs in the transmission unit 12, the idling time t0 is shorter than in the normal state. The first standard value S1 is the first moving distance D1 and/or the first required time T1 in the normal state.

The second calculation value C2 is at least one of a second moving distance D2 that has been traveled when the electric current value reaches the brake threshold L1 or a second required time T2 that has been taken when the electric current value reaches the brake threshold L1. The brake threshold L1 is an electric current value corresponding to a predetermined braking force. The second required time T2 is the first time t1 or the sum of the idling time t0 and the first time t1. The second moving distance D2 is the product of a moving speed of the brake shoe 14 obtained by converting the number of rotations of the motor 11 and the first time t1, or the product of the above moving speed and the sum of the idling time t0 and the first time t1. The second standard value S2 is the second required time T2 and/or the second moving distance D2 in the normal state.

The third calculation value C3 is at least one of a third moving distance D3 that has been traveled when the electric current value reaches the target threshold LT or a third required time T3 that has been taken when the electric current value reaches the target threshold LT. The target threshold LT is an electric current value corresponding to a target braking force. The third required time T3 is the second time t2 or the sum of the idling time t0, the first time t1, and the second time t2. The third moving distance D3 is the product of a moving speed of the brake shoe 14 obtained by converting the number of rotations of the motor 11 and the second time t2, or the product of the above moving speed and the sum of the idling time t0, the first time t1, and the second time t2. The third standard value S3 is the third required time T3 and/or the third moving distance D3 in the normal state.

The fourth calculation value C4 is a fourth required time T4 elapsing after the electric current value reaches the contact threshold L0 and until the electric current value reaches the brake threshold L1. As described above, the contact threshold L0 corresponds to the electric current value at the time when the brake shoe 14 contacts the tread surface 2A of the wheel 2 or the foreign object, and the brake threshold L1 is the electric current value corresponding to a predetermined braking force. The fourth required time T4 is the first time t1. The fourth standard value S4 is the first time t1 in the normal state.

The fifth calculation value C5 is a fifth required time T5 elapsing after the brake instruction is received and until the electric current flows in the motor 11 for start-up. The fifth required time T5 is the start-up time t0A for applying the brake or the start-up time t0A' for releasing the brake. When the electric circuit of the motor 11 is deteriorated, its responsiveness may be reduced, resulting in longer start-up times t0A, t0A'. The fifth standard value S5 is the start-up times t0A, t0A' in the normal state.

The calculation unit 23 may calculate at least one of a sixth calculation value C6 or a seventh calculation value C7 described as follows, in addition to the first to fifth calculation values C1 to C5. The sixth calculation value C6 is the retaining force releasing time tB elapsing after the electric current flows in the motor 11 and until the pressing force reaches zero. When the sticking occurs in the retaining mechanism 12A, the retaining force releasing time tB may be longer. The sixth standard value S6 is the retaining force releasing time tB in the normal state.

The seventh calculation value C7 is the withdrawing time tC, or a predetermined amount of time elapsing from the point of time at which the electric current started to flow in the motor 11. When the sticking occurs in the transmission unit 12, the withdrawing time tC may be shorter. The seventh standard value S7 is the withdrawing time tC in the normal state.

The calculation unit 23 calculates the first to fifth calculation values C1 to C5 with a starting point set at the point of time at which the brake instruction was received. For example, the required time is calculated as an elapsed time from the point of time at which the brake instruction was received, and the moving distance is calculated as a moving distance from the position taken at the point of time at which the brake instruction was received. The calculation unit 23 may calculate the first to fifth calculation values C1 to C5 with a starting point set at the point of time at which the motor 11 was started. For example, the starting point of the moving distance is the position of the brake shoe 14 at the point of time at which the motor 11 was started, and the starting point of the required time is the point of time at which the motor 11 was started. The calculation unit 23 stores the calculated calculation values C on the storage unit 25. The determination unit 24 uses the calculation values C stored on the storage unit 25 as the standard values S. For example, the calculation values C calculated when the brake device 10 is installed on a railway vehicle or when a preoperational inspection is performed are used as the standard values S.

The determination unit 24 determines that abnormal operation has occurred when a determination condition is satisfied. The determination condition is that the difference between a calculation value C and a standard value S is equal to or larger than a predetermined value. If using a plurality of calculation values C among the first to seventh calculation values C1 to C7, the determination unit 24 may determine that abnormal operation has occurred when there are a preset number or more calculation values C having a difference from the respective standard value S equal to or larger than a predetermined value. The maximum value of the preset number is the number of the calculation values C.

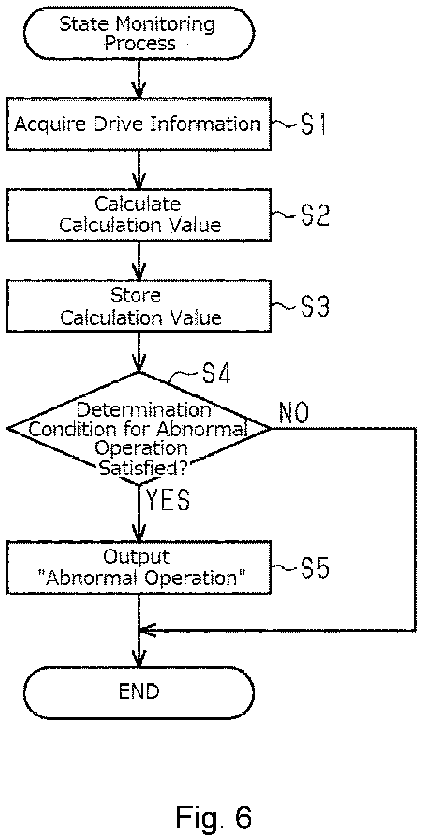

With reference to Fig. 6, the following now describes the steps of the state monitoring process performed by the control device 20. Fig. 6 illustrates a process for monitoring abnormal operation of the brake device 10 while the brake device 10 is in operation.

The control device 20 first acquires the drive information (step S1). Specifically, the drive information acquiring unit 22 acquires the electric current value of the motor 11 and acquires the number of rotations of the motor 11 for calculation of the moving distance D. Step S1 corresponds to the acquisition step.

Subsequently, the control device 20 calculates the calculation value C (step S2). Specifically, the calculation unit 23 calculates the calculation value C based on the acquired drive information of the motor 11. The calculation value C is at least one of the moving distance D traveled by the brake shoe 14 or the required time T taken until the brake shoe 14 reaches a predetermined position. The step S2 corresponds to the calculation step.

Subsequently, the control device 20 stores the calculation value C (step S3). Specifically, the calculation unit 23 stores the calculated calculation value C on the storage unit 25. When the calculated calculation value C is to be used as a standard value S, the control unit 21 stores the calculated calculation value C as the standard value S on the storage unit 25.

Subsequently, the control device 20 determines whether the determination condition for abnormal operation has been satisfied (step S4). Specifically, the determination unit 24 compares the calculation value C to the standard value S to determine whether the difference between the calculation value C and the standard value S is equal to or larger than a predetermined value. When the determination unit 24 determines that the determination condition for abnormal operation is not satisfied (No in step S4), the process is ended. Step S4 corresponds to the determination step.

On the other hand, when the determination unit 24 determines that the determination condition for abnormal operation is satisfied (Yes in step S4), it outputs "abnormal operation" (step S5). Specifically, the control unit 21 causes the informing unit 26 to inform the driver or the operator of the "abnormal operation." Therefore, it is possible to grasp abnormal operation of the brake device 10 based on information acquired from the brake device 10.

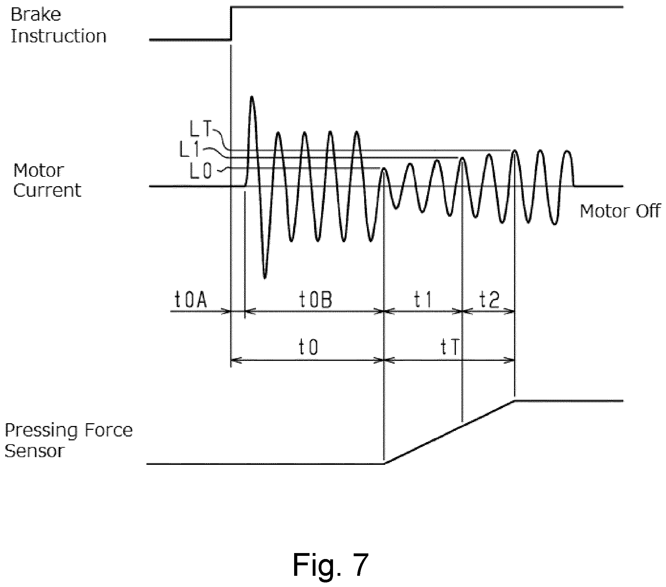

Next, reference is made to Fig. 7 to describe the variation of the electric current value of the motor 11 in application of brake. The control unit 21 performs control such that the electric current value in the idling period is larger than that in the pressing period. Fig. 7 shows the electric current value of the motor 11 at the time when the control unit 21 receives a brake instruction and applies brake. Specifically, this electric current value represents one of the U, V, and W phases of a three-phase brushless DC motor.

As shown in Fig. 7, when the control unit 21 receives a brake instruction, an electric current flows in the motor 11 with a delay of start-up time t0A. The start-up time t0A is a small amount of time. When the electric current flows in the motor 11, the transmission unit 12 moves the brake shoe 14 toward the tread surface 2A of the wheel 2. Since the electric current value in the idling period is larger than that in the pressing period, it cannot be grasped from the electric current value that the brake shoe 14 has contacted the tread surface 2A of the wheel 2 or the foreign object. Therefore, the pressing force sensor 15 senses the pressing force, such that the control unit 21 can grasp that the movement of the brake shoe 14 has been restrained. The calculation unit 23 determines that the brake shoe 14 has contacted the tread surface 2A of the wheel 2 or the foreign object when the pressing force is sensed. The time elapsing after the brake instruction is received and until the pressing force sensor 15 senses the pressing force is the idling time t0. The time elapsing after the electric current flows in the motor 11 and until the pressing force sensor 15 senses the pressing force is the actual idling time t0B. Therefore, the idling time t0 is the sum of the start-up time t0A and the actual idling time t0B (t0 = t0A + t0B). The electric current value is increased gradually and reaches a brake threshold L1 corresponding to a predetermined braking force and further reaches a target threshold LT corresponding to a target braking force. After the target threshold LT is reached, the electric current value is no longer increased. The time elapsing after the brake shoe 14 contacts the tread surface 2A of the wheel 2 or the foreign object and until a first point of time at which the electric current value reaches the brake threshold L1 is a first time t1. The time elapsing after the first point of time and until a second point of time at which the electric current value reaches the target threshold LT is a second time t2. The sum of the first time t1 and the second time t2 is the pressing time tT (tT = t1 + t2). The pressing force sensed by the pressing force sensor 15 is increased when the brake shoe 14 presses the tread surface 2A of the wheel 2 or the foreign object and is no longer increased after the electric current value reaches the target threshold LT. The pressing force of the brake shoe retainer 13 is thereafter retained by the retaining mechanism 12A, and thus the motor 11 is de-energized.

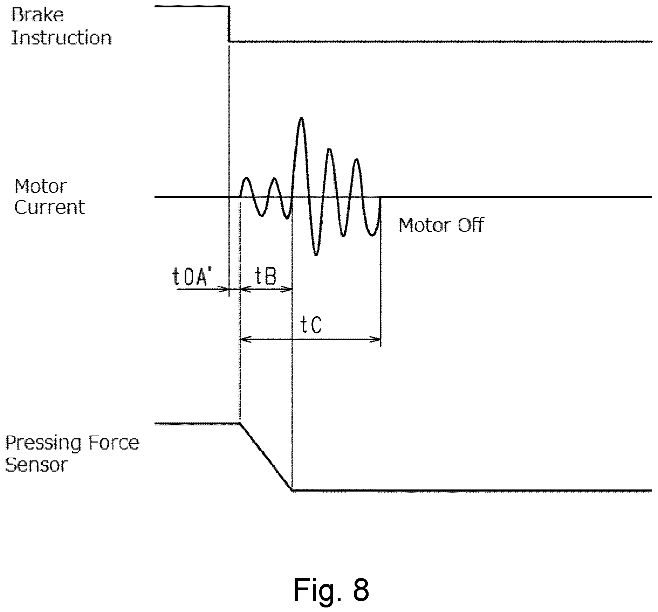

Next, reference is made to Fig. 8 to describe the variation of the electric current value of the motor 11 in release of brake. Because of the presence of the retaining mechanism 12A, the control unit 21 performs control in release of brake such that the electric current value in the idling period is smaller than that in the pressing period. Fig. 8, which is the same as Fig. 5, shows the electric current value of the motor 11 at the time when the control unit 21 receives a release instruction and no longer receives the brake instruction and thus it releases brake. The explanation of Fig. 8 is omitted because it is the same as Fig. 5.

For the variation of the electric current value as shown in Figs. 7 and 8, the control device 20 can also perform the state monitoring process to grasp abnormal operation of the brake device 10 based on information acquired from the brake device 10.

Advantageous of the first embodiment will be now described. (1-1) The calculation unit 23 calculates at least one of the moving distance D of the brake shoe 14 or the required time T, based on the drive information acquired by the drive information acquiring unit 22. The determination unit 24 compares the calculated value to the standard value S to determine whether abnormal operation has occurred. Therefore, it is possible to grasp abnormal operation of the brake device 10 based on information acquired from the brake device 10.

(1-2) For the control of application of brake in which the electric current value in the idling period is larger than that in the pressing period, the electric current value varies largely when the brake shoe 14 contacts the tread surface 2A of the wheel 2 or the foreign object and stops moving. Therefore, the first calculation value C1, which is calculated when the brake shoe 14 contacts the tread surface 2A of the wheel 2 or the foreign object, can be compared to the standard value S to easily grasp abnormal operation of the brake device 10.

(1-3) For the control of application of brake in which the electric current value in the idling period is larger than that in the pressing period, the electric current value is increased when the brake shoe 14 stops moving after it contacts the tread surface 2A of the wheel 2 or the foreign object. Therefore, the second calculation value C2, which is calculated when a predetermined braking force is applied, can be compared to the standard value S to grasp whether the abnormal operation of the brake device 10 is caused by occurrence of sticking.

(1-4) For the control of application of brake in which the electric current value in the idling period is larger than that in the pressing period, the electric current value is increased when the brake shoe 14 stops moving after it contacts the tread surface 2A of the wheel 2 or the foreign object. Therefore, the third calculation value C3, which is calculated when a target braking force is applied, can be compared to the standard value S to grasp whether the abnormal operation of the brake device 10 is caused by occurrence of sticking.

(1-5) The required time T elapsing after the brake shoe 14 is brought into contact and until a predetermined braking force is applied is the same regardless of the presence of the foreign object being caught. Therefore, when the required time T is shorted than the standard value S, sticking may have occurred. This makes it possible to grasp details of the abnormal operation of the brake device 10.

(1-6) The required time T elapsing after the brake instruction is received and until the electric current flows in the motor 11 for start-up can be compared to the standard value S to grasp deterioration of parts caused by delayed responsiveness of the electronic circuit.

(1-7) At least one of the moving distance D or the required time T in the normal operation can be used as the standard value S for comparison to grasp abnormal operation of the brake device 10. (1-8) The start-up of the motor 11 can be grasped from the electric current flowing in the motor 11, and therefore, even if the brake instruction is not received, it is possible to determine whether abnormal operation of the brake device 10 has occurred.

(1-9) The brake control is divided into a first type and a second type. In the first type of control, the inclination of the deceleration is controlled to be constant irrespective of the target deceleration, while in the second type of control, the time taken until the target deceleration is reached is controlled to be constant. Therefore, the determination unit 24 can compare the calculation value C to a standard value S for the same conditions, so as to accurately determine whether abnormal operation of the brake device 10 has occurred.

### <Second Embodiment>

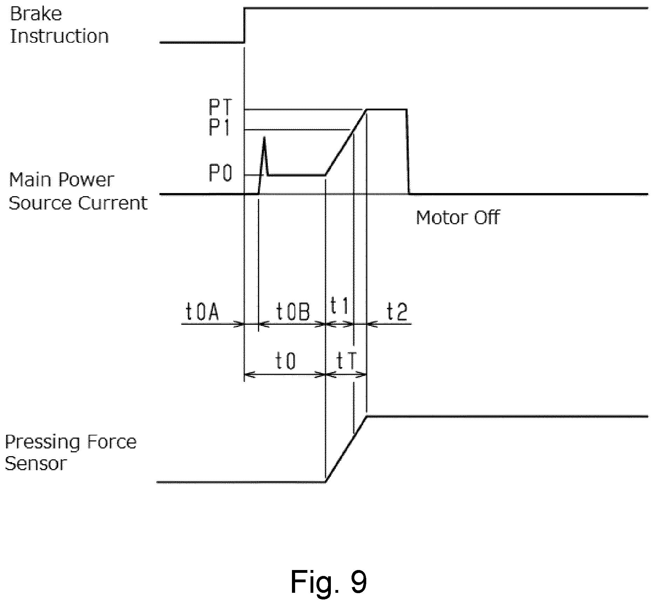

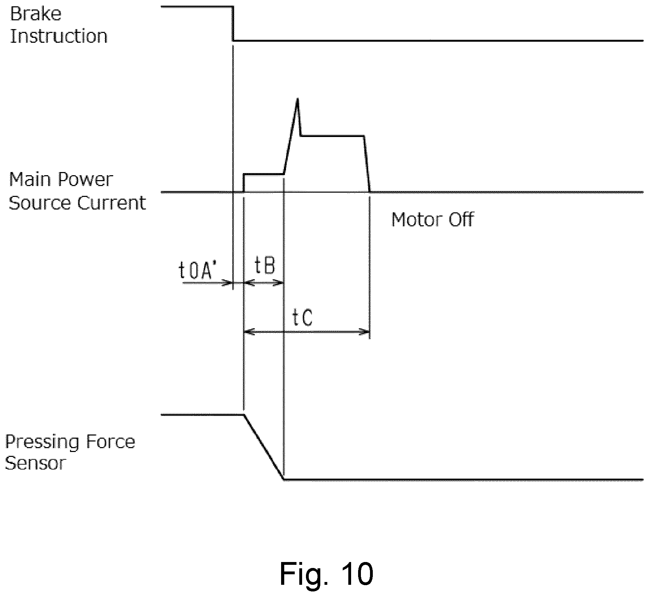

With reference to Figs. 9 and 10, the following describes a brake device according to a second embodiment. The brake device according to this embodiment is different from the first embodiment in that the electric current value of the main power source is used in place of the electric current value of the motor. The following description will be focused on the differences from the first embodiment.

Figs. 9 and 10 show the electric current values of the main power source for supplying electric power to the motor 11. The control unit 21 performs control such that the electric current value in the idling period is smaller than that in the pressing period. Fig. 9 shows the electric current value of the main power source at the time when the control unit 21 receives a brake instruction and applies brake. As shown in Fig. 9, when the control unit 21 receives a brake instruction, an electric current flows from the main power source with a delay of start-up time t0A. The start-up time t0A is a small amount of time. When the electric current flows from the main power source and drives the motor 11, the transmission unit 12 moves the brake shoe 14 toward the tread surface 2A of the wheel 2. When the brake shoe 14 contacts the tread surface 2A of the wheel 2 or a foreign object, the electric current value reaches or exceeds the contact threshold P0. The electric current value may reach or exceed the contact threshold P0 immediately after the electric current flows from the main power source, but this should be ignored. The calculation unit 23 determines that the brake shoe 14 has contacted the tread surface 2A of the wheel 2 or the foreign object when the electric current value reaches or exceeds the contact threshold P0. The time elapsing after the brake instruction is received and until the electric current value reaches or exceeds the contact threshold P0 is the idling time t0. The time elapsing after the electric current flows and until the electric current value reaches the contact threshold P0 is the actual idling time t0B. Therefore, the idling time t0 is the sum of the start-up time t0A and the actual idling time t0B (t0 = t0A + t0B). When the brake shoe 14 presses the tread surface 2A of the wheel 2 or the foreign object, the electric current value reaches and exceeds a brake threshold P1 corresponding to a predetermined braking force and further reaches a target threshold PT corresponding to a target braking force. After the target threshold PT is reached, the electric current value is no longer increased. The time elapsing after the brake shoe 14 contacts the tread surface 2A of the wheel 2 or the foreign object and until a first point of time at which the electric current value reaches the brake threshold P1 is a first time t1. The time elapsing after the first point of time and until a second point of time at which the electric current value reaches the target threshold PT is a second time t2. The sum of the first time t1 and the second time t2 is the pressing time tT (tT = t1 + t2). The pressing force sensed by the pressing force sensor 15 is increased when the brake shoe 14 presses the tread surface 2A of the wheel 2 or the foreign object and is no longer increased after the electric current value reaches the target threshold PT. The pressing force of the brake shoe retainer 13 is thereafter retained by the retaining mechanism 12A, and thus the motor 11 is de-energized.

Fig. 10 shows the electric current value of the main power source at the time when the control unit 21 receives a release instruction and no longer receives the brake instruction and thus it releases brake. As shown in Fig. 10, when the control unit 21 receives a release instruction, an electric current flows from the main power source with a delay of start-up time t0A'. The start-up time t0A' is a small amount of time. When the electric current flows from the main power source, the retaining mechanism 12A first releases the retaining force, and thus the pressing force becomes zero. The time elapsing after the electric current flows from the main power source and until the pressing force reaches zero is the retaining force releasing time tB. When the retaining mechanism 12A releases the retaining force, the transmission unit 12 moves the brake shoe 14 away from the tread surface 2A of the wheel 2. The electric current value becomes larger than it was in the retaining force releasing time tB in which the retaining mechanism 12A is releasing the retaining force. The control unit 21 turns off the main power source after a predetermined amount of time has elapsed from the point of time at which the electric current started to flow from the main power source. This amount of time is a withdrawing time tC. The withdrawing time tC is the time for releasing the braking force and moving the brake shoe 14 to its original position. It is also possible that, after receiving the release instruction, the control unit 21 moves the brake shoe 14 based on the product of a moving speed obtained by converting a predetermined number of rotations of the motor 11 into a stroke of the brake shoe 14 and a predetermined amount of time. Such configuration eliminates the need of sensing the pressing force. It is also possible that the control unit 21 stops the supply of power from the main power source after a predetermined amount of time has elapsed from the point of time at which the electric current value became larger. Such configuration eliminates the need of sensing the pressing force. It is also possible that the control unit 21 stops the supply of power from the main power source after a predetermined amount of time has elapsed from the point of time at which the pressing force became zero.

As in the first embodiment, the calculation unit 23 calculates at least one of the first to seventh calculation values C1 to C7. The determination unit 24 determines that abnormal operation has occurred when a determination condition is satisfied. The determination condition is that the difference between a calculation value C and a standard value S is equal to or larger than a predetermined value. If using a plurality of calculation values C among the first to seventh calculation values C1 to C7, the determination unit 24 may determine that abnormal operation has occurred when there are a preset number or more calculation values C having a difference from the respective standard value S equal to or larger than a predetermined value. The maximum value of the preset number is the number of the calculation values C.

As in the first embodiment, the control device 20 performs the state monitoring process, in which the electric current value of the main power source is used in place of the electric current value of the motor 11, and any of the first to seventh calculation values C1 to C7 is used as the calculation value C. Therefore, it is possible to grasp abnormal operation of the brake device 10 based on information acquired from the brake device 10.

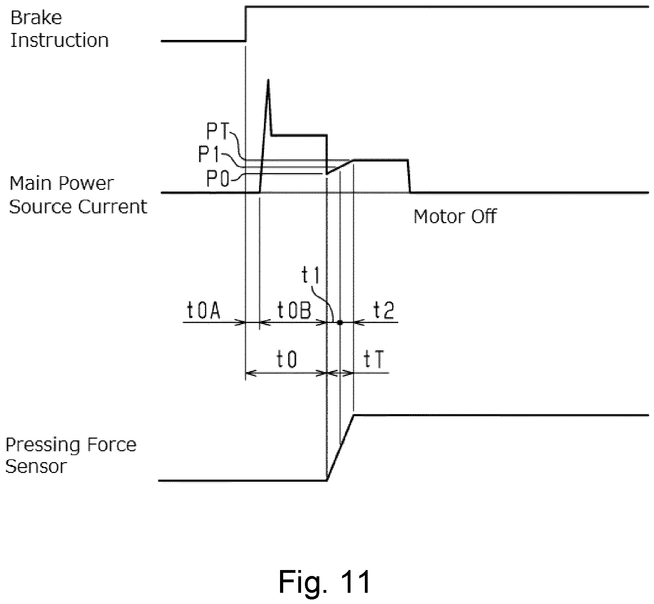

Next, reference is made to Fig. 11 to describe the variation of the electric current value of the main power source in application of brake. The control unit 21 performs control such that the electric current value in the idling period is larger than that in the pressing period. Fig. 11 shows the electric current value of the main power source at the time when the control unit 21 receives a brake instruction and applies brake.

As shown in Fig. 11, when the control unit 21 receives a brake instruction, an electric current flows in the motor 11 with a delay of start-up time t0A. The start-up time t0A is a small amount of time. When the electric current flows in the motor 11, the transmission unit 12 moves the brake shoe 14 toward the tread surface 2A of the wheel 2. Since the electric current value in the idling period is larger than that in the pressing period, it cannot be grasped from the electric current value that the brake shoe 14 has contacted the tread surface 2A of the wheel 2 or the foreign object. Therefore, the pressing force sensor 15 senses the pressing force, such that the control unit 21 can grasp that the movement of the brake shoe 14 has been restrained. The calculation unit 23 determines that the brake shoe 14 has contacted the tread surface 2A of the wheel 2 or the foreign object when the pressing force is sensed. The time elapsing after the brake instruction is received and until the pressing force sensor 15 senses the pressing force is the idling time t0. The time elapsing after the electric current flows from the main power source and until the pressing force sensor 15 senses the pressing force is the actual idling time t0B. Therefore, the idling time t0 is the sum of the start-up time t0A and the actual idling time t0B (t0 = t0A + t0B). The electric current value is increased gradually and reaches a brake threshold P1 corresponding to a predetermined braking force and further reaches a target threshold PT corresponding to a target braking force. After the target threshold PT is reached, the electric current value is no longer increased. The time elapsing after the brake shoe 14 contacts the tread surface 2A of the wheel 2 or the foreign object and until a first point of time at which the electric current value reaches the brake threshold P1 is a first time t1. The time elapsing after the first point of time and until a second point of time at which the electric current value reaches the target threshold PT is a second time t2. The sum of the first time t1 and the second time t2 is the pressing time tT (tT = t1 + t2). The pressing force sensed by the pressing force sensor 15 is increased when the brake shoe 14 presses the tread surface 2A of the wheel 2 or the foreign object and is no longer increased after the electric current value reaches the target threshold PT. The pressing force of the brake shoe retainer 13 is thereafter retained by the retaining mechanism 12A, and thus the supply of power from the main power source is stopped.

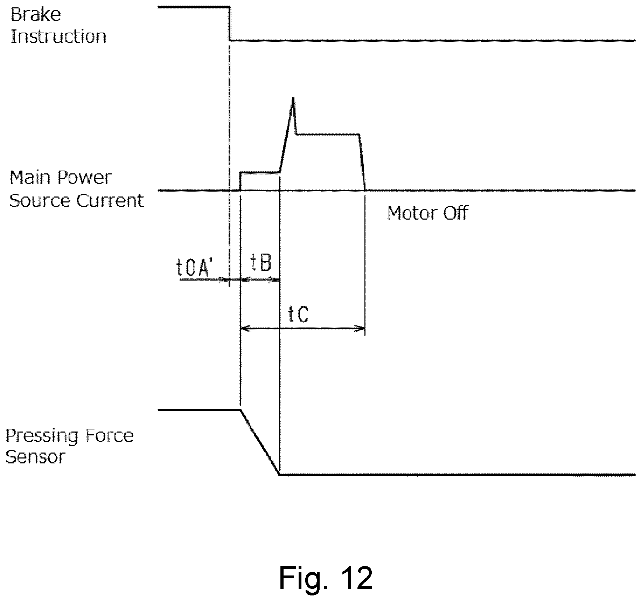

Next, reference is made to Fig. 12 to describe the variation of the electric current value of the main power source in release of brake. Even if the control unit 21 performs control in application of brake such that the electric current value in the idling period is larger than that in the pressing period, the control unit 21 performs control in release of brake such that the electric current value in the idling period is smaller than that in the pressing period, because of the presence of the retaining mechanism 12A. Fig. 12, which is the same as Fig. 10, shows the electric current value of the main power source at the time when the control unit 21 receives a release instruction and no longer receives the brake instruction and thus it releases brake. The explanation of Fig. 12 is omitted because it is the same as Fig. 10.

For the variation of the electric current value as shown in Figs. 11 and 12, the control device 20 can also perform the state monitoring process to grasp abnormal operation of the brake device 10 based on information acquired from the brake device 10.

An advantage of the second embodiment will be now described. The following advantage is obtained in addition to the advantages (1-1) to (1-9) of the first embodiment. (2-1) The electric current value of the main power source can be used in place of the electric current value of the motor 11 to grasp abnormal operation of the brake device 10 based on information acquired from the brake device 10.

### <Third Embodiment>

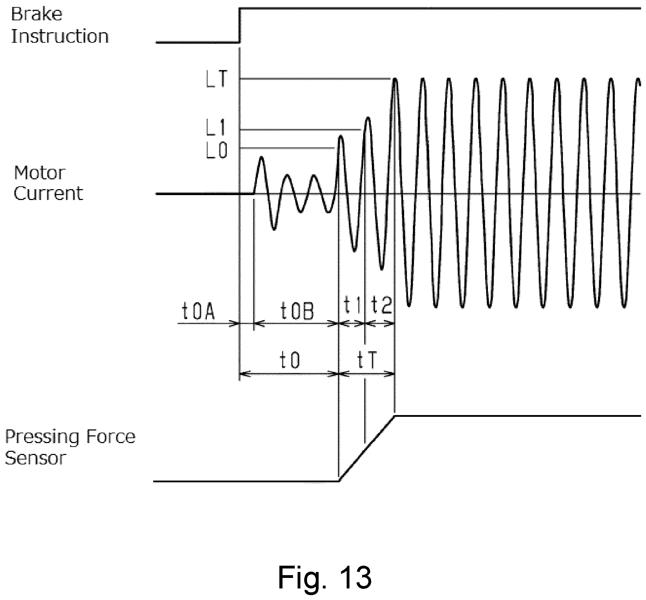

With reference to Figs. 13 to 16, the following describes a brake device according to a third embodiment. The brake device according to this embodiment is different from the first embodiment in that it does not include the retaining mechanism 12A. The following description will be focused on the differences from the first embodiment. Since the brake device 10 does not include the retaining mechanism 12A, the electric current continues to flow to maintain the braking state while the brake instruction is being received.

Reference is made to Fig. 13 to describe the variation of the electric current value of the motor 11 in application of brake. The control unit 21 performs control such that the electric current value in the idling period is smaller than that in the pressing period. Fig. 13 shows the electric current value of the motor 11 at the time when the control unit 21 receives a brake instruction and applies brake. Specifically, this electric current value represents one of the U, V, and W phases of a three-phase brushless DC motor.

As shown in Fig. 13, when the control unit 21 receives a brake instruction, an electric current flows in the motor 11 with a delay of start-up time t0A. The start-up time t0A is a small amount of time. When the electric current flows in the motor 11, the transmission unit 12 moves the brake shoe 14 toward the tread surface 2A of the wheel 2. When the brake shoe 14 contacts the tread surface 2A of the wheel 2 or a foreign object, the movement of the brake shoe 14 is restrained, and thus the electric current value exceeds the contact threshold L0. The calculation unit 23 determines that the brake shoe 14 has contacted the tread surface 2A of the wheel 2 or the foreign object when the electric current value reaches the contact threshold L0. The time elapsing after the brake instruction is received and until the electric current value reaches the contact threshold L0 is the idling time t0. The time elapsing after the electric current flows in the motor 11 and until the electric current value reaches the contact threshold L0 is the actual idling time t0B. Therefore, the idling time t0 is the sum of the start-up time t0A and the actual idling time t0B (t0 = t0A + t0B). When the brake shoe 14 presses the tread surface 2A of the wheel 2 or the foreign object, the electric current value becomes larger than it was in the idling period. The electric current value thus reaches a brake threshold L1 corresponding to a predetermined braking force and further reaches a target threshold LT corresponding to a target braking force. After the target threshold LT is reached, the electric current value is no longer increased. The time elapsing after the brake shoe 14 contacts the tread surface 2A of the wheel 2 or the foreign object and until a first point of time at which the electric current value reaches the brake threshold L1 is a first time t1. The time elapsing after the first point of time and until a second point of time at which the electric current value reaches the target threshold LT is a second time t2. The sum of the first time t1 and the second time t2 is the pressing time tT (tT = t1 + t2). The control unit 21 continues to cause the electric current to flow at the target threshold LT while the control unit 21 is receiving the brake instruction.

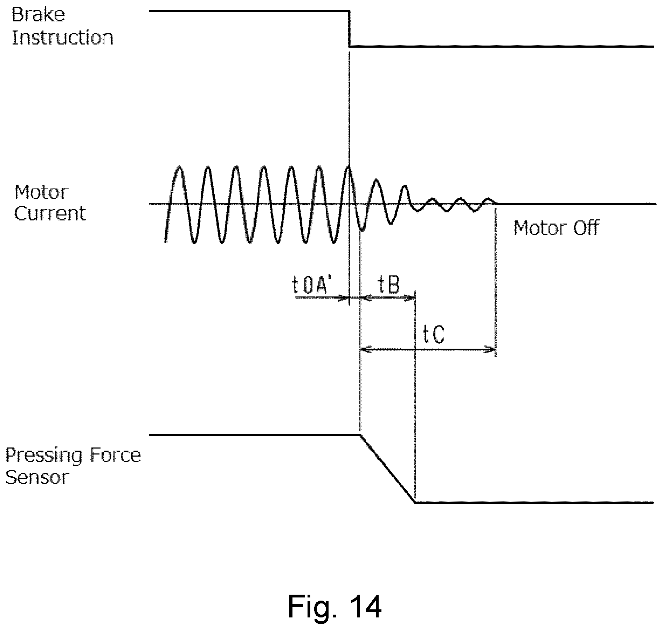

Reference is made to Fig. 14 to describe the variation of the electric current value of the motor 11 in release of brake. The control unit 21 performs control such that the electric current value in the idling period is smaller than that in the pressing period. Fig. 14 shows the electric current value of the motor 11 at the time when the control unit 21 receives a release instruction and no longer receives the brake instruction and thus it releases brake.

As shown in Fig. 14, the electric current continues to flow at the target threshold LT while the brake instruction is being received. When the control unit 21 receives a release instruction, the electric current flowing in the motor 11 is reduced with a delay of start-up time t0A'. The start-up time t0A' is a small amount of time. Since the pressing of the brake shoe 14 against the tread surface 2A of the wheel 2 is released, the electric current value is reduced. The time elapsing after the electric current flowing in the motor 11 is reduced and until the pressing force reaches zero is the retaining force releasing time tB. Subsequently, the electric current value becomes smaller than it was in the retaining force releasing time tB. The control unit 21 stops the motor 11 after a predetermined amount of time has elapsed from the point of time at which the control unit 21 started to reduce the electric current flowing in the motor 11. This amount of time is a withdrawing time tC. The withdrawing time tC is the time for releasing the braking force and moving the brake shoe 14 to its original position. It is also possible that, after receiving the release instruction, the control unit 21 moves the brake shoe 14 based on the product of a moving speed obtained by converting a predetermined number of rotations of the motor 11 into a stroke of the brake shoe 14 and a predetermined amount of time. Such configuration eliminates the need of sensing the pressing force. It is also possible that the control unit 21 stops the motor 11 after a predetermined amount of time has elapsed from the point of time at which the electric current value became smaller. Such configuration eliminates the need of sensing the pressing force. It is also possible that the control unit 21 stops the motor 11 after a predetermined amount of time has elapsed from the point of time at which the pressing force became zero.

As in the first embodiment, the calculation unit 23 calculates at least one of the first to seventh calculation values C1 to C7. The determination unit 24 determines that abnormal operation has occurred when a determination condition is satisfied. The determination condition is that the difference between a calculation value C and a standard value S is equal to or larger than a predetermined value. If using a plurality of calculation values C among the first to seventh calculation values C1 to C7, the determination unit 24 may determine that abnormal operation has occurred when there are a preset number or more calculation values C having a difference from the respective standard value S equal to or larger than a predetermined value. The maximum value of the preset number is the number of the calculation values C.

As in the first embodiment, the control device 20 performs the state monitoring process, in which the electric current value of the motor 11 is used, and any of the first to seventh calculation values C1 to C7 is used as the calculation value C. Therefore, it is possible to grasp abnormal operation of the brake device 10 based on information acquired from the brake device 10.

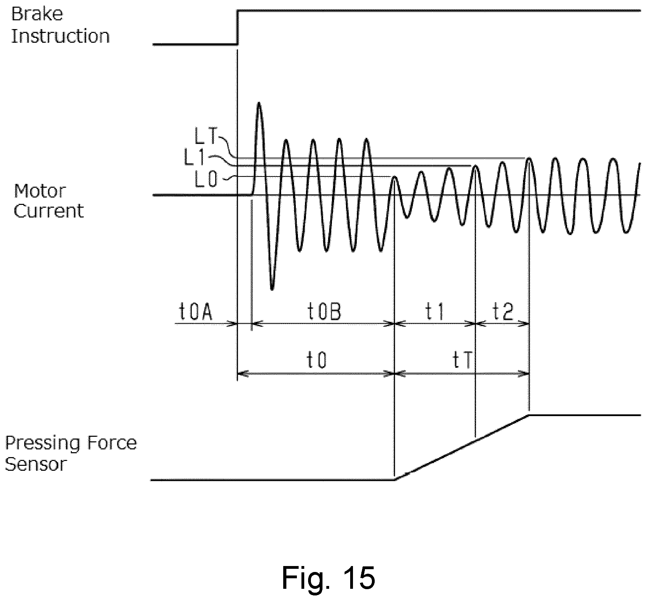

Next, reference is made to Fig. 15 to describe the variation of the electric current value of the motor 11 in application of brake. The control unit 21 performs control such that the electric current value in the idling period is larger than that in the pressing period. Fig. 15 shows the electric current value of the motor 11 at the time when the control unit 21 receives a brake instruction and applies brake. Specifically, this electric current value represents one of the U, V, and W phases of a three-phase brushless DC motor.

As shown in Fig. 15, when the control unit 21 receives a brake instruction, an electric current flows in the motor 11 with a delay of start-up time t0A. The start-up time t0A is a small amount of time. When the electric current flows in the motor 11, the transmission unit 12 moves the brake shoe 14 toward the tread surface 2A of the wheel 2. Since the electric current value in the idling period is larger than that in the pressing period, it cannot be grasped from the electric current value that the brake shoe 14 has contacted the tread surface 2A of the wheel 2 or the foreign object. Therefore, the pressing force sensor 15 senses the pressing force, such that the control unit 21 can grasp that the movement of the brake shoe 14 has been restrained. The calculation unit 23 determines that the brake shoe 14 has contacted the tread surface 2A of the wheel 2 or the foreign object when the pressing force is sensed. The time elapsing after the brake instruction is received and until the pressing force sensor 15 senses the pressing force is the idling time t0. The time elapsing after the electric current flows in the motor 11 and until the pressing force sensor 15 senses the pressing force is the actual idling time t0B. Therefore, the idling time t0 is the sum of the start-up time t0A and the actual idling time t0B (t0 = t0A + t0B). After reaching the contact threshold L0, the electric current value is increased gradually and reaches a brake threshold L1 corresponding to a predetermined braking force and further reaches a target threshold LT corresponding to a target braking force. After the target threshold LT is reached, the electric current value is no longer increased. The time elapsing after the brake shoe 14 contacts the tread surface 2A of the wheel 2 or the foreign object and until a first point of time at which the electric current value reaches the brake threshold L1 is a first time t1. The time elapsing after the first point of time and until a second point of time at which the electric current value reaches the target threshold LT is a second time t2. The sum of the first time t1 and the second time t2 is the pressing time tT (tT = t1 + t2). The control unit 21 continues to cause the electric current to flow at the target threshold LT while the control unit 21 is receiving the brake instruction.

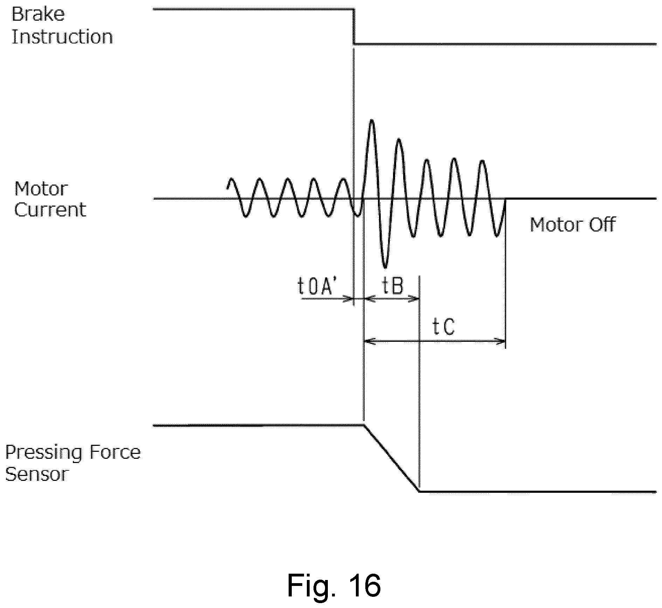

Next, reference is made to Fig. 16 to describe the variation of the electric current value of the motor 11 in release of brake. The control unit 21 performs control such that the electric current value in the idling period is larger than that in the pressing period. Fig. 16 shows the electric current value of the motor 11 at the time when the control unit 21 receives a release instruction and no longer receives the brake instruction and thus it releases brake.

As shown in Fig. 16, the electric current continues to flow at the target threshold LT while the brake instruction is being received. When the control unit 21 receives a release instruction, the electric current flowing in the motor 11 is increased with a delay of start-up time t0A'. The start-up time t0A' is a small amount of time. Since the pressing of the brake shoe 14 against the tread surface 2A of the wheel 2 is released, the electric current value is decreased. The time elapsing after the electric current flowing in the motor 11 is increased and until the pressing force reaches zero is the retaining force releasing time tB. Subsequently, the electric current value becomes smaller than it was in the retaining force releasing time tB. The control unit 21 stops the motor 11 after a predetermined amount of time has elapsed from the point of time at which the control unit 21 started to increase the electric current flowing in the motor 11. This amount of time is a withdrawing time tC. The withdrawing time tC is the time for releasing the braking force and moving the brake shoe 14 to its original position. It is also possible that, after receiving the release instruction, the control unit 21 moves the brake shoe 14 based on the product of a moving speed obtained by converting a predetermined number of rotations of the motor 11 into a stroke of the brake shoe 14 and a predetermined amount of time. Such configuration eliminates the need of sensing the pressing force. It is also possible that the control unit 21 stops the motor 11 after a predetermined amount of time has elapsed from the point of time at which the electric current value became larger. Such configuration eliminates the need of sensing the pressing force. It is also possible that the control unit 21 stops the motor 11 after a predetermined amount of time has elapsed from the point of time at which the pressing force became zero.

As in the first embodiment, the calculation unit 23 calculates at least one of the first to seventh calculation values C1 to C7. The determination unit 24 determines that abnormal operation has occurred when a determination condition is satisfied. The determination condition is that the difference between a calculation value C and a standard value S is equal to or larger than a predetermined value. If using a plurality of calculation values C among the first to seventh calculation values C1 to C7, the determination unit 24 may determine that abnormal operation has occurred when there are a preset number or more calculation values C having a difference from the respective standard value S equal to or larger than a predetermined value. The maximum value of the preset number is the number of the calculation values C.

As in the first embodiment, the control device 20 performs the state monitoring process, in which the electric current value of the motor 11 is used, and any of the first to seventh calculation values C1 to C7 is used as the calculation value C. Therefore, it is possible to grasp abnormal operation of the brake device 10 based on information acquired from the brake device 10.

For the variation of the electric current value as shown in Figs. 15 and 16, the control device 20 can also perform the state monitoring process to grasp abnormal operation of the brake device 10 based on information acquired from the brake device 10.

An advantage of the third embodiment will be now described. The following advantage is obtained in addition to the advantages (1-1) to (1-9) of the first embodiment. (3-1) For the brake device 10 not including the retaining mechanism 12A, it is possible to grasp abnormal operation of the brake device 10 based on information acquired from the brake device 10.

### <Fourth Embodiment>

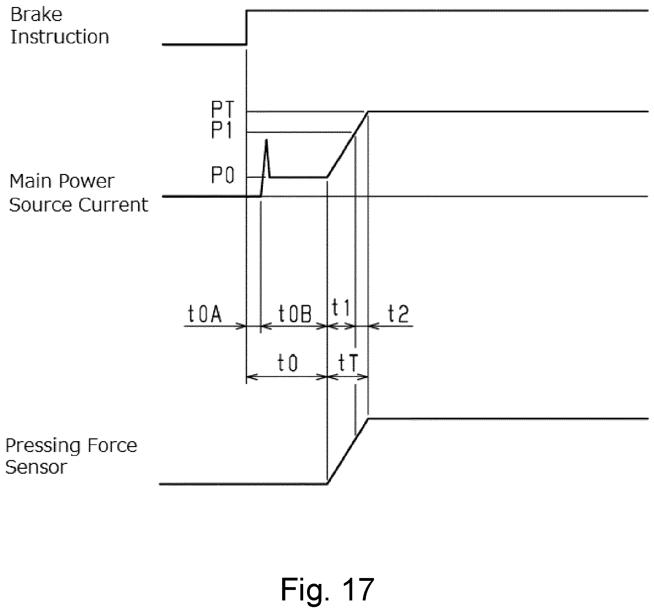

With reference to Figs. 17 to 20, the following describes a brake device according to a fourth embodiment. The brake device according to this embodiment is different from the second embodiment in that it does not include the retaining mechanism 12A. The following description will be focused on the differences from the second embodiment. Since the brake device 10 does not include the retaining mechanism 12A, the electric current continues to flow to maintain the braking state while the brake instruction is being received.

Reference is made to Fig. 17 to describe the variation of the electric current value of the main power source in application of brake. The control unit 21 performs control such that the electric current value in the idling period is smaller than that in the pressing period. Fig. 17 shows the electric current value of the main power source at the time when the control unit 21 receives a brake instruction and applies brake.

As shown in Fig. 17, when the control unit 21 receives a brake instruction, an electric current flows from the main power source with a delay of start-up time t0A. The start-up time t0A is a small amount of time. When the electric current flows from the main power source and drives the motor 11, the transmission unit 12 moves the brake shoe 14 toward the tread surface 2A of the wheel 2. When the brake shoe 14 contacts the tread surface 2A of the wheel 2 or a foreign object, the electric current value reaches or exceeds the contact threshold P0. The electric current value may reach or exceed the contact threshold P0 immediately after the electric current flows from the main power source, but this should be ignored. The calculation unit 23 determines that the brake shoe 14 has contacted the tread surface 2A of the wheel 2 or the foreign object when the electric current value reaches or exceeds the contact threshold P0. The time elapsing after the brake instruction is received and until the electric current value reaches or exceeds the contact threshold P0 is the idling time t0. The time elapsing after the electric current flows and until the electric current value reaches the contact threshold P0 is the actual idling time t0B. Therefore, the idling time t0 is the sum of the start-up time t0A and the actual idling time t0B (t0 = t0A + t0B). When the brake shoe 14 presses the tread surface 2A of the wheel 2 or the foreign object, the electric current value reaches and exceeds a brake threshold P1 corresponding to a predetermined braking force and further reaches a target threshold PT corresponding to a target braking force. After the target threshold PT is reached, the electric current value is no longer increased. The time elapsing after the brake shoe 14 contacts the tread surface 2A of the wheel 2 or the foreign object and until a first point of time at which the electric current value reaches the brake threshold P1 is a first time t1. The time elapsing after the first point of time and until a second point of time at which the electric current value reaches the target threshold PT is a second time t2. The sum of the first time t1 and the second time t2 is the pressing time tT (tT = t1 + t2). The pressing force sensed by the pressing force sensor 15 is increased when the brake shoe 14 presses the tread surface 2A of the wheel 2 or the foreign object and is no longer increased after the electric current value reaches the target threshold PT. The control unit 21 continues to cause the electric current to flow at the target threshold PT while the control unit 21 is receiving the brake instruction.

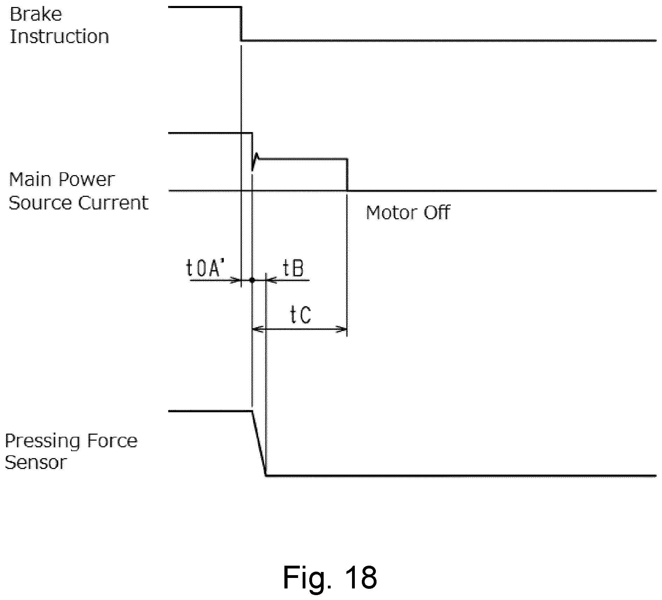

Reference is made to Fig. 18 to describe the variation of the electric current value of the main power source in release of brake. The control unit 21 performs control such that the electric current value in the idling period is smaller than that in the pressing period. Fig. 18 shows the electric current value of the main power source at the time when the control unit 21 receives a release instruction and no longer receives the brake instruction and thus it releases brake.

As shown in Fig. 18, the electric current continues to flow at the target threshold PT while the brake instruction is being received. When the control unit 21 receives a release instruction, the electric current flowing from the main power source is reduced with a delay of start-up time t0A'. The start-up time t0A' is a small amount of time. Since the pressing of the brake shoe 14 against the tread surface 2A of the wheel 2 is released, the electric current value is reduced. The time elapsing after the electric current from the main power source is reduced and until the pressing force reaches zero is the retaining force releasing time tB. The control unit 21 stops the supply of power from the main power source after a predetermined amount of time has elapsed from the point of time at which the electric current from the main power source was reduced. This amount of time is a withdrawing time tC. The withdrawing time tC is the time for releasing the braking force and moving the brake shoe 14 to its original position. It is also possible that, after receiving the release instruction, the control unit 21 moves the brake shoe 14 based on the product of a moving speed obtained by converting a predetermined number of rotations of the motor 11 into a stroke of the brake shoe 14 and a predetermined amount of time. Such configuration eliminates the need of sensing the pressing force. It is also possible that the control unit 21 stops the supply of power from the main power source after a predetermined amount of time has elapsed from the point of time at which the electric current value became larger. Such configuration eliminates the need of sensing the pressing force. It is also possible that the control unit 21 stops the supply of power from the main power source after a predetermined amount of time has elapsed from the point of time at which the pressing force became zero.

As in the first embodiment, the calculation unit 23 calculates at least one of the first to seventh calculation values C1 to C7. The determination unit 24 determines that abnormal operation has occurred when a determination condition is satisfied. The determination condition is that the difference between a calculation value C and a standard value S is equal to or larger than a predetermined value. If using a plurality of calculation values C among the first to seventh calculation values C1 to C7, the determination unit 24 may determine that abnormal operation has occurred when there are a preset number or more calculation values C having a difference from the respective standard value S equal to or larger than a predetermined value. The maximum value of the preset number is the number of the calculation values C.

As in the first embodiment, the control device 20 performs the state monitoring process, in which the electric current value of the main power source is used in place of the electric current value of the motor 11, and any of the first to seventh calculation values C1 to C7 is used as the calculation value C. Therefore, it is possible to grasp abnormal operation of the brake device 10 based on information acquired from the brake device 10.

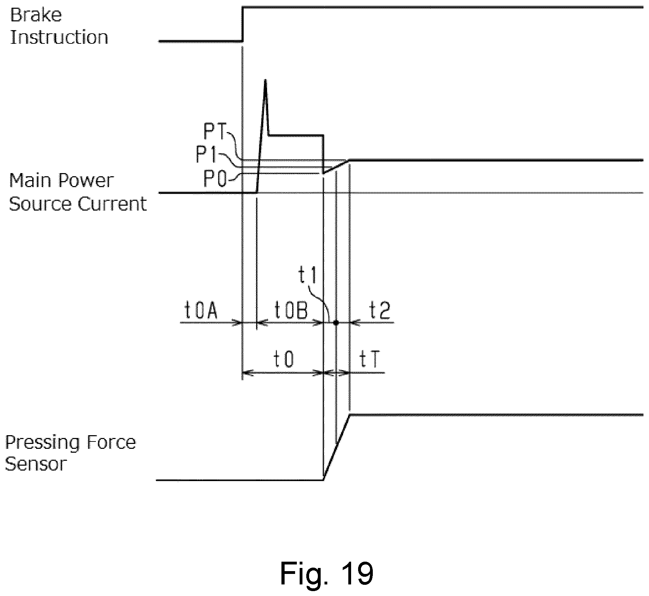

Next, reference is made to Fig. 19 to describe the variation of the electric current value of the main power source in application of brake. The control unit 21 performs control such that the electric current value in the idling period is larger than that in the pressing period. Fig. 19 shows the electric current value of the main power source at the time when the control unit 21 receives a brake instruction and applies brake.

As shown in Fig. 19, when the control unit 21 receives a brake instruction, an electric current flows in the motor 11 with a delay of start-up time t0A. The start-up time t0A is a small amount of time. When the electric current flows in the motor 11, the transmission unit 12 moves the brake shoe 14 toward the tread surface 2A of the wheel 2. Since the electric current value in the idling period becomes larger than that in the pressing period, it cannot be grasped from the electric current value that the brake shoe 14 has contacted the tread surface 2A of the wheel 2 or the foreign object. Therefore, the pressing force sensor 15 senses the pressing force, such that the control unit 21 can grasp that the movement of the brake shoe 14 has been restrained. The calculation unit 23 determines that the brake shoe 14 has contacted the tread surface 2A of the wheel 2 or the foreign object when the pressing force is sensed. The time elapsing after the brake instruction is received and until the pressing force sensor 15 senses the pressing force is the idling time t0. The time elapsing after the electric current flows and until the pressing force sensor 15 senses the pressing force is the actual idling time t0B. Therefore, the idling time t0 is the sum of the start-up time t0A and the actual idling time t0B (t0 = t0A + t0B). The electric current value is increased gradually and reaches a brake threshold P1 corresponding to a predetermined braking force and further reaches a target threshold PT corresponding to a target braking force. After the target threshold PT is reached, the electric current value is no longer increased. The time elapsing after the brake shoe 14 contacts the tread surface 2A of the wheel 2 or the foreign object and until a first point of time at which the electric current value reaches the brake threshold P1 is a first time t1. The time elapsing after the first point of time and until a second point of time at which the electric current value reaches the target threshold PT is a second time t2. The sum of the first time t1 and the second time t2 is the pressing time tT (tT = t1 + t2). The pressing force sensed by the pressing force sensor 15 is increased when the brake shoe 14 presses the tread surface 2A of the wheel 2 or the foreign object and is no longer increased after the electric current value reaches the target threshold PT. The control unit 21 continues to cause the electric current to flow at the target threshold PT while the control unit 21 is receiving the brake instruction.

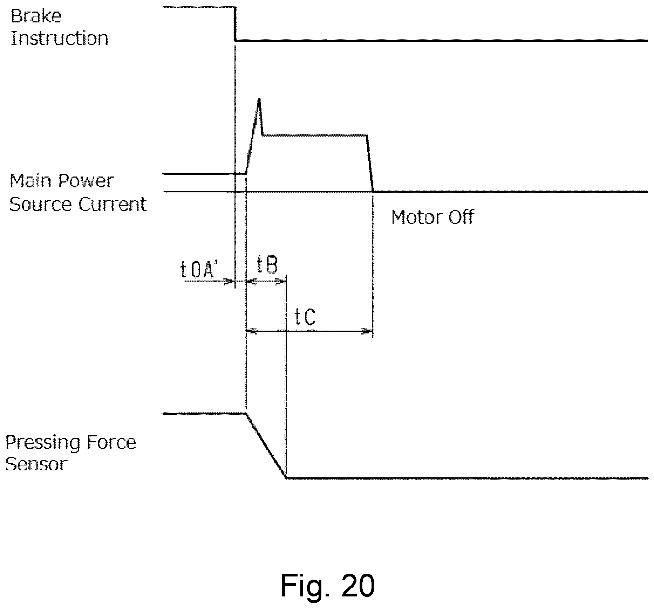

Next, reference is made to Fig. 20 to describe the variation of the electric current value of the main power source in release of brake. The control unit 21 performs control in release of brake such that the electric current value in the idling period is larger than that in the pressing period. Fig. 20 shows the electric current value of the main power source at the time when the control unit 21 receives a release instruction and no longer receives the brake instruction and thus it releases brake.

As shown in Fig. 20, the electric current continues to flow at the target threshold PT while the brake instruction is being received. When the control unit 21 receives a release instruction, the electric current flowing from the main power source is increased with a delay of start-up time t0A'. The start-up time t0A' is a small amount of time. The time elapsing after the electric current from the main power source is increased and until the pressing force reaches zero is the retaining force releasing time tB. The control unit 21 stops the supply of power from the main power source after a predetermined amount of time has elapsed from the point of time at which the electric current from the main power source was increased. This amount of time is a withdrawing time tC. The withdrawing time tC is the time for releasing the braking force and moving the brake shoe 14 to its original position. It is also possible that, after receiving the release instruction, the control unit 21 moves the brake shoe 14 based on the product of a moving speed obtained by converting a predetermined number of rotations of the motor 11 into a stroke of the brake shoe 14 and a predetermined amount of time. Such configuration eliminates the need of sensing the pressing force. It is also possible that the control unit 21 stops the supply of power from the main power source after a predetermined amount of time has elapsed from the point of time at which the electric current value became larger. Such configuration eliminates the need of sensing the pressing force. It is also possible that the control unit 21 stops the supply of power from the main power source after a predetermined amount of time has elapsed from the point of time at which the pressing force became zero.

For the variation of the electric current value as shown in Figs. 19 and 20, the control device 20 can also perform the state monitoring process to grasp abnormal operation of the brake device 10 based on information acquired from the brake device 10.

An advantage of the fourth embodiment will be now described. The following advantage is obtained in addition to the advantages (1-1) to (1-9) of the first embodiment. (4-1) For the brake device 10 not including the retaining mechanism 12A, it is possible to use the electric current value of the main power source in place of the electric current value of the motor 11 to grasp abnormal operation of the brake device 10 based on information acquired from the brake device 10.

### <Fifth Embodiment>

With reference to Fig. 17, the following describes a brake device according to a fifth embodiment. The fifth embodiment is different from the first to fourth embodiments in that the brake device is a disc brake device. The following description will be focused on the differences from the first to fourth embodiments.

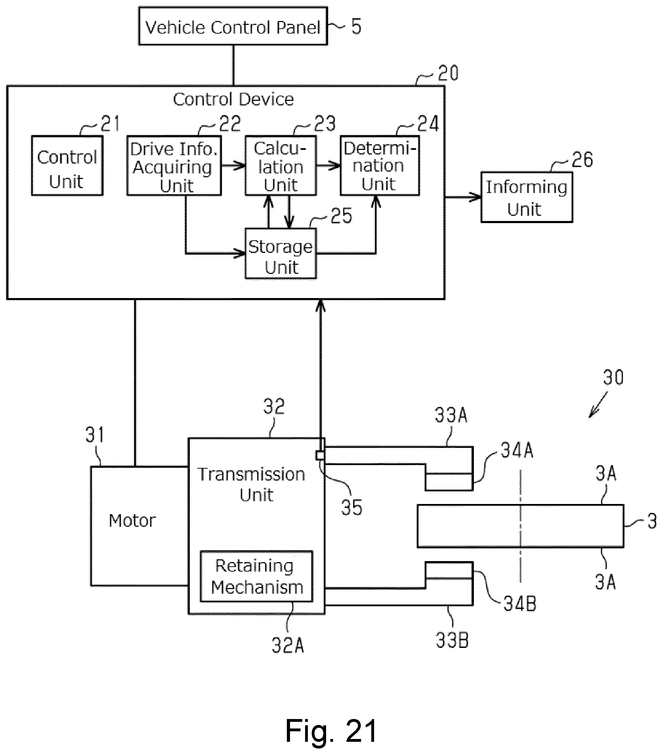

As shown in Fig. 21, a brake device 30 is a disc brake device for generating a braking force by pressing brake pads 34A and 34B against a disc 3 rotating integrally with the wheel 2 of the railway vehicle. The brake device 30 includes a rotating motor 31 and is driven by the motor 31. The brake device 30 includes a transmission unit 32 for transmitting the driving force of the motor 31 to the brake pads 34A and 34B and also includes a left arm 33A and a right arm 33B. The transmission unit 32 uses the driving force from the motor 31 to move the left and right arms 33A and 33B. The transmission unit 32 is provided with a retaining mechanism 32A. The retaining mechanism 32A retains the pressing force of the left and right arms 33A and 33B even after the driving of the motor 31 is stopped. The retaining mechanism 32A may be a one-way clutch that mechanically retains the positions of the left and right arms 33A and 33B. The retaining mechanism 32A releases the retention when rotated in the direction for releasing the brake. In the brake device 30 including the retaining mechanism 32A, the driving of the motor 31 can be stopped and the electric current flowing in the motor 31 can be zero while the braking state is maintained. The brake pad 34A is attached to the left arm 33A, and the brake pad 34B is attached to the right arm 33B. The left and right arms 33A and 33B are moved by the transmission unit 32 perpendicularly to the side surfaces 3A of the disc 3. The brake pads 34A and 34B are moved with the left and right arms 33A and 33B, so that the brake pads 34A and 34B are pressed against the side surfaces 3A of the disc 3. The transmission unit 32 is provided with a pressing force sensor 35. The pressing force sensor 35 senses the pressing force of the brake pads 34A and 34B from the reaction force acting on the transmission unit 32 and outputs information indicating the sensed pressing force to a control device 20. Here, the motor 31 is equivalent to an electric actuator. The disc 3 is a rotatable member and equivalent to a target member, and the brake pads 34A and 34B are equivalent to a friction member. It is also possible to use the wheel 2 as the target member instead of using the disc 3.

The brake device 30 is controlled by the control device 20, as in the first to fourth embodiments. The control device 20 controls the braking force based on control instructions from a vehicle control panel 5. The control device 20 includes a control unit 21 for controlling the brake device 30. The control unit 21 controls driving of the motor 31 according to a required braking force. The control unit 21 receives a brake instruction and a release instruction from the vehicle control panel 5. The brake instruction is an instruction for braking the vehicle having the wheel 2 by pressing the brake pads 34A and 34B against the side surfaces 3A of the disc 3. The release instruction is an instruction for releasing the pressing of the brake pads 34A and 34B against the side surfaces 3A of the disc 3. In accordance with the driver's operation, the vehicle control panel 5 outputs to the brake device 10 eight signals, for example, brake signals of one to seven notches and a release signal. These eight signals are represented by combinations of three signal lines each indicating 0 or 1. The control unit 21 causes the motor 31 to rotate in the braking direction to move the brake pads 34A and 34B toward the side surfaces 3A of the disc 3. Conversely, the control unit 21 causes the motor 31 to rotate in the releasing direction opposite to the braking direction to move the brake pads 34A and 34B away from the side surfaces 3A of the disc 3. In releasing the brake, the control unit 21 performs control such that the brake pads 34A and 34B move from positions where they contact the side surfaces 3A of the disc 3 to positions at a predetermined distance from the side surfaces 3A. Such control regulates the distance to be traveled and the time to be taken until braking is started by bringing the brake pads 34A and 34B into contact with the side surfaces 3A of the disc 3.

The control device 20 includes the drive information acquiring unit 22, a calculation unit 23, a determination unit 24, and a storage unit 25. The drive information acquiring unit 22 acquires drive information of the motor 31. The drive information includes the electric current value of the motor 31 and the number of rotations of the motor 31. The calculation unit 23 calculates a calculation value C based on the acquired drive information of the motor 31. The calculation value C is at least one of the moving distance D traveled by the brake pads 34A and 34B or the required time T taken until the brake pads 34A and 34B reach predetermined positions. The determination unit 24 compares the calculation value C to a standard value S to determine whether abnormal operation has occurred. The abnormal operation refers to the state in which the operation of the transmission unit 32, the left and right arms 33A and 33B, and the brake pads 34A and 34B is not normal. This occurs due to a foreign object being caught between the brake pads 34A and 34B and the side surfaces 3A of the disc 3 and due to sticking. The calculation value C is larger or smaller than the standard value S when abnormal operation has occurred. The standard value S is at least one of the moving distance D or the required time T in the normal state.

As in the first to fourth embodiments, the control device 20 calculates at least one of the first to seventh calculation values C1 to C7 as the calculation value C from the electric current value of the motor 31 and compares the calculation value C to the standard value S to determine whether abnormal operation has occurred in the brake device 30. Therefore, it is possible to grasp abnormal operation of the brake device 30 based on information acquired from the brake device 30.

An advantage of the fifth embodiment will be now described. The fifth embodiment produces the following advantage in addition to the advantages (1-1) to (1-9) of the first embodiment, the advantage (2-1) of the second embodiment, the advantage (3-1) of the third embodiment, and the advantage (4-1) of the fourth embodiment. (5-1) For a disc brake device, it is also possible to grasp abnormal operation of the brake device 30 based on information acquired from the brake device 30, as in the first to fourth embodiments.

### <Other Embodiments>

The above embodiments can be modified as described below. The above embodiments and the following modifications can be implemented in combination to the extent where they are technically consistent with each other.

In the first and third embodiments, at least one of the first to seventh calculation values C1 to C7 is calculated as the calculation value C to determine whether abnormal operation has occurred in the brake devices 10 and 30. However, it is also possible to calculate only the calculation value C used to determine whether abnormal operation has occurred in the brake devices 10 and 30.

In the above embodiments, at least one of the moving distance D or the required time T in the normal state is used as the standard value S. However, it is also possible that at least one of the moving distance D or the required time T calculated previously is used as the standard value S.

In the above embodiments, at least one of the moving distance D or the required time T in the normal state is used as the standard value S. However, it is also possible that at least one of the moving distance D or the required time T for the friction member of another brake device on the same train (for example, a brake device on another car in the same train) is used as the standard value S.

In the above embodiments, it is determined whether abnormal operation has occurred in the brake device based on drive information of the brake device in application of brake. However, it is also possible to determine whether abnormal operation has occurred in the brake device based on drive information of the brake device in release of brake. For example, the start-up time t0A', the retaining force releasing time tB, or the withdrawing time tC may be calculated as the calculation value C, and the start-up time t0A', the retaining force releasing time tB, or the withdrawing time tC calculated previously or in the normal state may be used as the standard value S.

In the above embodiments, the electric current value of the electric actuator is used as the drive information. However, it is also possible to use, as the drive information, the torque or rotation speed of the electric actuator or time-series information indicating the load of the electric actuator.

In the above-described embodiments, the brake devices 10 and 30 are provided with the informing unit 26 for informing the driver or the operator of abnormal operation of the brake devices 10 and 30. However, the informing unit 26 may be omitted. In the above embodiments, the friction member is moved using the rotating motors 11 and 31 with a medium of the transmission unit. However, it is also possible that the friction member is moved using a linearly moving actuator or a linear actuator with a medium of the transmission unit.

The foregoing embodiments include a plurality of physically separate constituent parts. They may be combined into a single part, and any one of them may be divided into a plurality of physically separate constituent parts. Irrespective of whether or not the constituent parts are integrated, they are acceptable as long as they are configured to solve the problems.

According to the foregoing embodiments, a plurality of functions are distributively provided. Some or all of the functions may be integrated. Any one of the functions may be partly or entirely segmented into a plurality of functions, which are distributively provided. Irrespective of whether or not the functions are integrated or distributed, they are acceptable as long as they are configured to solve the problems.

### LIST OF REFERENCE NUMBERS

- 2: wheel (target member)
- 2A: tread surface
- 3: disc (target member)
- 3A: side surface
- 5: vehicle control panel
- 10: brake device
- 11: motor
- 12: transmission unit
- 12A: retaining mechanism
- 13: brake shoe retainer
- 14: brake shoe (friction member)
- 15: pressing force sensor
- 20: control device
- 21: control unit
- 22: drive information acquiring unit (acquiring unit)
- 23: calculation unit
- 24: determination unit
- 25: storage unit
- 26: informing unit
- 30: brake device
- 31: motor
- 32: transmission unit
- 32A: retaining mechanism
- 33A: left arm
- 33B: right arm
- 34A: brake pad (friction member)
- 34B: brake pad (friction member)
- 35: pressing force sensor

## Claims

1. A brake device (10, 30) for applying brake to a vehicle having a target member (2, 3) by using an electric actuator (11, 31) to drive a friction member (14, 34A, 34B) so that the friction member (14, 34A, 34B) is pressed against the target member (2, 3), the brake device (10, 30) comprising:
an acquiring unit (22) for acquiring drive information of the electric actuator (11, 31);
**characterized by**
a calculation unit (23) for calculating a first value based on the acquired drive information, the first value being at least one of a moving distance traveled by the friction member (14, 34A, 34B) or a required time taken until the friction member (14, 34A, 34B) reaches a predetermined position; and
a determination unit (24) for determining whether abnormal operation has occurred by comparing the first value to a standard value.

2. The brake device (10, 30) of claim 1,
wherein the drive information is an electric current value of the electric actuator (11, 31), and
wherein the first value is at least one of the moving distance having been traveled or the required time having been taken when the electric current value reaches a value to be obtained when the friction member (14, 34A, 34B) contacts the target member (2, 3) or a foreign object.

3. The brake device (10, 30) of claim 1,
wherein the drive information is an electric current value of the electric actuator (11, 31), and
wherein the first value is at least one of the moving distance having been traveled or the required time having been taken when the electric current value reaches a value corresponding to a predetermined braking force.

4. The brake device (10, 30) of claim 1,
wherein the drive information is an electric current value of the electric actuator (11, 31), and
wherein the first value is at least one of the moving distance having been traveled or the required time having been taken when the electric current value reaches a value corresponding to a target braking force.

5. The brake device (10, 30) of claim 1,
wherein the drive information is an electric current value of the electric actuator (11, 31), and
wherein the first value is a required time taken after the electric current value reaches a value to be obtained when the friction member (14, 34A, 34B) contacts the target member (2, 3) or a foreign object and until the electric current value reaches a value corresponding to a predetermined braking force.

6. The brake device (10, 30) of claim 1,
wherein the drive information is an electric current value of the electric actuator (11, 31), and
wherein the first value is a required time taken after receiving a brake instruction and until an electric current flows in the electric actuator (11, 31) for start-up.

7. The brake device (10, 30) of any one of claims 1 to 6, wherein the standard value is the at least one of the moving distance or the required time in a normal state or the at least one of the moving distance or the required time calculated previously.

8. The brake device (10, 30) of any one of claims 1 to 6, wherein the standard value is at least one of the moving distance or the required time for a friction member (14, 34A, 34B) of another brake device (10, 30) on a same train.

9. The brake device (10, 30) of any one of claims 1 to 8, wherein a starting point of the moving distance is a position of the friction member (14, 34A, 34B) at a point of time at which the electric actuator (11, 31) is started, and a starting point of the required time is the point of time at which the electric actuator (11, 31) is started.

10. The brake device (10, 30) of any one of claims 1 to 9, wherein in brake control in which variation of a deceleration of the brake device (10, 30) relative to time is constant, the determination unit (24) compares the first value to the standard value for another brake instruction under a same condition.

11. The brake device (10, 30) of any one of claims 1 to 10, wherein the target member (2, 3) is a wheel (2) or a rotating body (3) configured to rotate integrally with the wheel (2).

12. An abnormal operation determination method for a brake device (10, 30), the brake device (10, 30) being configured to apply brake to a vehicle having a target member (2, 3) by using an electric actuator (11, 31) to drive a friction member (14, 34A, 34B) so that the friction member (14, 34A, 34B) is pressed against the target member (2, 3), the method comprising:
an acquisition step of acquiring drive information of the electric actuator (11, 31);
**characterized by**
a calculation step of calculating a first value based on the acquired drive information, the first value being at least one of a moving distance traveled by the friction member (14, 34A, 34B) or a required time taken until the friction member (14, 34A, 34B) reaches a predetermined position; and
a determination step of determining whether abnormal operation has occurred by comparing the first value to a standard value.

13. An abnormal operation determination program for a brake device (10, 30), the brake device (10, 30) being configured to apply brake to a vehicle having a target member (2, 3) by using an electric actuator (11, 31) to drive a friction member (14, 34A, 34B) so that the friction member (14, 34A, 34B) is pressed against the target member (2, 3), the program causing a computer to perform:
an acquisition step of acquiring drive information of the electric actuator (11, 31);
**characterized by**
a calculation step of calculating a first value based on the acquired drive information, the first value being at least one of a moving distance traveled by the friction member (14, 34A, 34B) or a required time taken until the friction member (14, 34A, 34B) reaches a predetermined position; and
a determination step of determining whether abnormal operation has occurred by comparing the first value to a standard value.

## Patentansprüche

1. Bremsvorrichtung (10, 30) zum Abbremsen eines Fahrzeugs mit einem Zielelement (2, 3) durch Verwendung eines elektrischen Stellglieds (11, 31) zum Antreiben eines Reibelements (14, 34A, 34B), so dass das Reibelement (14, 34A, 34B) gegen das Zielelement (2, 3) gedrückt wird, wobei die Bremsvorrichtung (10, 30) aufweist:
eine Erfassungseinheit (22) zum Erfassen von Antriebsinformation des elektrischen Stellglieds (11, 31);
**gekennzeichnet durch**
eine Berechnungseinheit (23) zum Berechnen eines ersten Wertes auf der Grundlage der erfassten Antriebsinformation, wobei der erste Wert einer Bewegungsstrecke, die von dem Reibungselement (14, 34A, 34B) zurückgelegt wird, und/oder einer erforderlichen Zeit entspricht, die verstreicht, bis das Reibungselement (14, 34A, 34B) eine vorbestimmte Position erreicht; und
eine Bestimmungseinheit (24) zum Bestimmen, ob ein abnormaler Betrieb aufgetreten ist, durch Vergleichen des ersten Werts mit einem Standardwert.

2. Bremsvorrichtung (10, 30) nach Anspruch 1, wobei die Antriebsinformation ein elektrischer Stromwert des elektrischen Stellglieds (11, 31) ist und wobei der erste Wert die zurückgelegte Bewegungsstrecke und/oder die erforderliche Zeit ist, die verstrichen ist, wenn der elektrische Stromwert einen Wert erreicht, der zu erreichen ist, wenn das Reibungselement (14, 34A, 34B) das Zielelement (2, 3) oder ein Fremdobjekt berührt.

3. Bremsvorrichtung (10, 30) nach Anspruch 1, wobei die Antriebsinformation ein elektrischer Stromwert des elektrischen Stellglieds (11, 31) ist und wobei der erste Wert die zurückgelegte Bewegungsstrecke und/oder die erforderliche Zeit ist, die verstrichen ist, wenn der elektrische Stromwert einen Wert erreicht, der einer vorbestimmten Bremskraft entspricht.

4. Bremsvorrichtung (10, 30) nach Anspruch 1, wobei die Antriebsinformation ein elektrischer Stromwert des elektrischen Stellglieds (11, 31) ist und wobei der erste Wert die zurückgelegte Bewegungsstrecke und/oder die erforderliche Zeit ist, die verstrichen ist, wenn der elektrische Stromwert einen Wert erreicht, der einer Zielbremskraft entspricht.

5. Bremsvorrichtung (10, 30) nach Anspruch 1, wobei die Antriebsinformation ein elektrischer Stromwert des elektrischen Stellglieds (11, 31) ist und
wobei der erste Wert eine erforderliche Zeit ist, die verstrichen ist, nachdem der elektrische Stromwert einen zu erzielenden Wert erreicht, wenn das Reibungselement (14, 34A, 348) das Zielelement (2, 3) oder ein Fremdobjekt berührt, und bis der elektrische Stromwert einen Wert erreicht, der einer vorbestimmten Bremskraft entspricht.

6. Bremsvorrichtung (10, 30) nach Anspruch 1, wobei die Antriebsinformation ein elektrischer Stromwert des elektrischen Stellglieds (11, 31) ist und wobei der erste Wert eine erforderliche Zeit ist, die nach dem Empfang einer Bremsanweisung verstreicht, bis ein elektrischer Strom zum Starten in dem elektrischen Stellglied (11, 31) fließt.

7. Bremsvorrichtung (10, 30) nach einem der Ansprüche 1 bis 6, wobei der Standardwert die Bewegungsstrecke und/oder die erforderliche Zeit in einem Normalzustand ist oder die Bewegungsstrecke und/oder die erforderliche Zeit ist, die zuvor berechnet worden ist.

8. Bremsvorrichtung (10, 30) nach einem der Ansprüche 1 bis 6, wobei der Standardwert die Bewegungsstrecke und/oder die erforderliche Zeit für ein Reibungselement (14, 34A, 34B) einer anderen Bremsvorrichtung (10, 30) in einem gleichen Zug ist.

9. Bremsvorrichtung (10, 30) nach einem der Ansprüche 1 bis 8, wobei ein Anfangspunkt der Bewegungsstrecke eine Position des Reibungselements (14, 34A, 34B) zu einem Zeitpunkt ist, zu dem das elektrische Stellglied (11, 31) gestartet wird, und ein Startpunkt der erforderlichen Zeit der Zeitpunkt ist, zu dem das elektrische Stellglied (11, 31) gestartet wird.

10. Bremsvorrichtung (10, 30) nach einem der Ansprüche 1 bis 9, wobei bei einem Bremssteuerungsvorgang, bei dem die zeitliche Änderung einer Verzögerung der Bremsvorrichtung (10, 30) konstant ist, die Bestimmungseinheit (24) den ersten Wert mit dem Standardwert für eine andere Bremsanweisung unter derselben Bedingung vergleicht.

11. Bremsvorrichtung (10, 30) nach einem der Ansprüche 1 bis 10, wobei das Zielelement (2, 3) ein Rad (2) oder ein rotierender Körper (3) ist, der ausgebildet ist, sich zusammen mit dem Rad (2) zu drehen.

12. Verfahren zur Bestimmung eines abnormalen Betriebs einer Bremsvorrichtung (10, 30), wobei die Bremsvorrichtung (10, 30) ausgebildet ist, ein Abbremsen an einem Fahrzeug mit einem Zielelement (2, 3) durch Verwendung eines elektrischen Stellglieds (11, 31) zum Antreiben eines Reibelements (14, 34A, 34B) derart auszuführen, dass das Reibelement (14, 34A, 34B) gegen das Zielelement (2, 3) gedrückt wird, wobei das Verfahren umfasst:
einen Erfassungsschritt des Erfassens von Antriebsinformation des elektrischen Stellglieds (11, 31);
**gekennzeichnet durch**
einen Berechnungsschritt zum Berechnen eines ersten Werts auf der Grundlage der erfassten Antriebsinformation, wobei der erste Wert einer Bewegungsstrecke, die von dem Reibelement (14, 34A, 34B) zurückgelegt wird, und/oder einer erforderlichen Zeit entspricht, die verstreicht, bis das Reibelement (14, 34A, 34B) eine vorgegebene Position erreicht; und
einen Bestimmungsschritt zum Bestimmen, ob ein abnormaler Betrieb aufgetreten ist, durch Vergleichen des ersten Werts mit einem Standardwert.

13. Programm zur Bestimmung eines abnormalen Betriebs für eine Bremsvorrichtung (10, 30), wobei die Bremsvorrichtung (10, 30) ausgebildet ist, ein Abbremsen an einem Fahrzeug mit einem Zielelement (2, 3) durch Verwendung eines elektrischen Stellglieds (11, 31) zum Antreiben eines Reibelements (14, 34A, 34B) derart auszuführen, dass das Reibelement (14, 34A, 34B) gegen das Zielelement (2, 3) gedrückt wird, wobei das Programm einen Computer veranlasst auszuführen:
einen Erfassungsschritt zum Erfassen von Antriebsinformation des elektrischen Stellglieds (11, 31);
**gekennzeichnet durch**
einen Berechnungsschritt zum Berechnen eines ersten Werts auf der Grundlage der erfassten Antriebsinformation, wobei der erste Wert einer Bewegungsstrecke, die von dem Reibelement (14, 34A, 34B) zurückgelegt wird, und/oder einer erforderlichen Zeit entspricht, die verstreicht, bis das Reibelement (14, 34A, 34B) eine vorgegebene Position erreicht; und
einen Bestimmungsschritt zum Bestimmen, ob ein abnormaler Betrieb aufgetreten ist, durch Vergleichen des ersten Werts mit einem Standardwert.

## Revendications

1. Dispositif de freinage (10, 30) permettant de freiner un véhicule ayant un élément cible (2, 3) en utilisant un actionneur électrique (11, 31) pour entraîner un élément de friction (14, 34A, 34B) de sorte que l'élément de friction (14, 34A, 34B) est comprimé contre l'élément cible (2, 3), le dispositif de freinage (10, 30) comprenant les éléments suivants :
une unité d'acquisition (22) pour l'acquisition des informations d'entraînement de l'actionneur électrique (11, 31) ;
**caractérisé par**
une unité de calcul (23) permettant de calculer une première valeur sur la base des informations d'entraînement acquises, la première valeur étant au moins l'une des suivantes : une distance de déplacement parcourue par l'élément de friction (14, 34A, 34B) ou un temps nécessaire pour que l'élément de friction (14, 34A, 34B) atteigne une position prédéterminée ; et
une unité de détermination (24) permettant de déterminer si un fonctionnement anormal s'est produit en comparant la première valeur à une valeur standard.

2. Dispositif de freinage (10, 30) selon la revendication 1,
dans lequel l'information d'entraînement est une valeur de courant électrique de l'actionneur électrique (11, 31), et
dans lequel la première valeur est au moins l'une des suivantes : la distance de déplacement a été parcourue ou le temps nécessaire a été pris lorsque la valeur du courant électrique atteint une valeur à obtenir lorsque l'élément de friction (14, 34A, 34B) entre en contact avec l'élément cible (2, 3) ou un objet étranger.

3. Dispositif de freinage (10, 30) selon la revendication 1,
dans lequel l'information d'entraînement est une valeur de courant électrique de l'actionneur électrique (11, 31), et
dans lequel la première valeur est au moins l'une des suivantes : la distance de déplacement a été parcourue ou le temps nécessaire a été pris lorsque la valeur du courant électrique atteint une valeur correspondant à une force de freinage prédéterminée.

4. Dispositif de freinage (10, 30) selon la revendication 1,
dans lequel l'information d'entraînement est une valeur de courant électrique de l'actionneur électrique (11, 31), et
dans lequel la première valeur est au moins l'une des suivantes : la distance de déplacement parcourue ou le temps requis pour que la valeur du courant électrique atteigne une valeur correspondant à une force de freinage cible.

5. Dispositif de freinage (10, 30) selon la revendication 1,
dans lequel l'information d'entraînement est une valeur de courant électrique de l'actionneur électrique (11, 31), et
dans lequel la première valeur est un temps requis après que la valeur du courant électrique a atteint une valeur à obtenir lorsque l'élément de friction (14, 34A, 34B) entre en contact avec l'élément cible (2, 3) ou un objet étranger et jusqu'à ce que la valeur du courant électrique atteigne une valeur correspondant à une force de freinage prédéterminée.

6. Dispositif de freinage (10, 30) selon la revendication 1,
dans lequel l'information d'entraînement est une valeur de courant électrique de l'actionneur électrique (11, 31), et
dans lequel la première valeur est un temps nécessaire après la réception d'une instruction de freinage et jusqu'à ce qu'un courant électrique circule dans l'actionneur électrique (11, 31) pour le démarrage.

7. Dispositif de freinage (10, 30) selon l'une des revendications 1 à 6, dans lequel la valeur standard est au moins l'une des deux valeurs suivantes : la distance de déplacement ou le temps nécessaire dans un état normal, ou l'une des deux valeurs suivantes : la distance de déplacement ou le temps nécessaire calculés précédemment.

8. Dispositif de freinage (10, 30) selon l'une des revendications 1 à 6, dans lequel la valeur standard est au moins l'une des deux valeurs suivantes : la distance de déplacement ou le temps requis pour un organe de friction (14, 34A, 34B) d'un autre dispositif de freinage (10, 30) sur un même train.

9. Dispositif de freinage (10, 30) selon l'une des revendications 1 à 8, dans lequel un point de départ de la distance de déplacement est une position de l'élément de friction (14, 34A, 34B) à un moment où l'actionneur électrique (11, 31) est démarré, et un point de départ du temps requis est le moment où l'actionneur électrique (11, 31) est démarré.

10. Dispositif de freinage (10, 30) selon l'une des revendications 1 à 9, dans lequel, dans la commande de freinage où la variation de la décélération du dispositif de freinage (10, 30) par rapport au temps est constante, l'unité de détermination (24) compare la première valeur à la valeur standard d'une autre instruction de freinage dans les mêmes conditions.

11. Dispositif de freinage (10, 30) selon l'une des revendications 1 à 10, dans lequel l'élément cible (2, 3) est une roue (2) ou un corps rotatif (3) configuré pour tourner intégralement avec la roue (2).

12. Procédé de détermination d'un fonctionnement anormal pour un dispositif de freinage (10, 30), le dispositif de freinage (10, 30) étant configuré pour freiner un véhicule ayant un élément cible (2, 3) en utilisant un actionneur électrique (11, 31) pour entraîner un élément de friction (14, 34A, 34B) de sorte que l'élément de friction (14, 34A, 34B) soit comprimé contre l'élément cible (2, 3), le procédé comprenant les éléments suivants :
une étape d'acquisition des informations d'entraînement de l'actionneur électrique (11, 31) ;
**caractérisé par**
une étape de calcul consistant à calculer une première valeur sur la base des informations d'entraînement acquises, la première valeur étant au moins l'une des suivantes : une distance de déplacement parcourue par l'élément de friction (14, 34A, 34B) ou un temps nécessaire pour que l'élément de friction (14, 34A, 34B) atteigne une position prédéterminée ; et
une étape de détermination consistant à déterminer si un fonctionnement anormal s'est produit en comparant la première valeur à une valeur standard.

13. Programme de détermination d'un fonctionnement anormal pour un dispositif de freinage (10, 30), le dispositif de freinage (10, 30) étant configuré pour freiner un véhicule ayant un élément cible (2, 3) en utilisant un actionneur électrique (11, 31) pour entraîner un élément de friction (14, 34A, 34B) de sorte que l'élément de friction (14, 34A, 34B) soit comprimé contre l'élément cible (2, 3), le programme amenant un ordinateur à exécuter :
une étape d'acquisition des informations d'entraînement de l'actionneur électrique (11, 31) ;
**caractérisé par**
une étape de calcul consistant à calculer une première valeur sur la base des informations d'entraînement acquises, la première valeur étant au moins l'une des suivantes : une distance de déplacement parcourue par l'élément de friction (14, 34A, 34B) ou un temps nécessaire pour que l'élément de friction (14, 34A, 34B) atteigne une position prédéterminée ; et
une étape de détermination consistant à déterminer si un fonctionnement anormal s'est produit en comparant la première valeur à une valeur standard.
